# FASCICULE DE BREVET EUROPEEN

(11) **EP 4 230 028 B1**
(45) Date de publication et mention de la délivrance du brevet: **31.12.2025**
(21) Numéro de dépôt: 23156663.9
(22) Date de dépôt: 14.02.2023
(51) Int. Cl.: A01G 7/04, A01G 9/24

(54) **SYSTÈME D'ÉCLAIRAGE POUR FAVORISER LE DÉVELOPPEMENT D'UN VÉGÉTAL**
BELEUCHTUNGSSYSTEM ZUR FÖRDERUNG DER ENTWICKLUNG VON PFLANZEN
LIGHTING SYSTEM FOR PROMOTING PLANT DEVELOPMENT

(30) Priorité: 16.02.2022 FR 2201352
(43) Date de publication de la demande: 23.08.2023
(73) Titulaire: Rouge Engineered Designs, 69002 Lyon (FR)
(72) Inventeur: EL QOMRI, Yassine, 69005 LYON (FR); GOLAZ, Louis, 44300 NANTES (FR)
(74) Mandataire: Germain Maureau

(56) Documents cités:
- WO-A2-2018/058153
- US-A1- 2019 082 610
- US-A1- 2021 307 254

## Description

### Préambule

La présente invention, qui appartient au domaine de l'éclairage et en particulier au domaine de l'éclairage agricole et horticole, concerne un système d'éclairage comprenant un dispositif d'éclairage artificiel destiné à compléter un éclairage naturel de manière à favoriser un développement d'un végétal.

Un végétal cultivé en intérieur a généralement besoin d'un apport supplémentaire de lumière pour compenser un manque, voire une absence totale, de lumière naturelle. C'est notamment le cas d'un végétal disposé dans une habitation, à un endroit éloigné de toute fenêtre ou dans une pièce ne bénéficiant pas d'un éclairage naturel. Dans ces cas de figures, il est nécessaire d'éclairer artificiellement le végétal, afin de permettre son développement, au moyen de sources de lumière artificielle adéquatement disposées.

On entend, par éclairage naturel, l'éclairage produit par le soleil, que ce soit par l'intermédiaire d'un rayonnement solaire reçu en direct et/ou par un rayonnement solaire diffus. En règle générale, l'éclairage naturel résulte donc de la combinaison du rayonnement solaire direct et du rayonnement solaire diffus.

Un végétal cultivé sous serre bénéficie d'un éclairage naturel plus ou moins proche de celui qu'il recevrait s'il était cultivé en extérieur. Il est cependant tout à fait possible, et même souhaitable, de compléter cet éclairage naturel, dépendant notamment de l'ensoleillement, par un éclairage artificiel approprié.

On entend, par éclairage artificiel, un éclairage produit ou émis par un dispositif d'éclairage artificiel comprenant au moins une source de rayonnement apte à produire un rayonnement dans au moins une bande de longueur d'onde.

Le végétal est dans ce cas soumis à un éclairage global constitué de la combinaison de l'éclairage naturel et de l'éclairage artificiel. Le végétal, en vue de réaliser le phénomène de photosynthèse nécessaire à sa croissance, dispose donc d'une énergie rayonnante apportée par le rayonnement produit par cet éclairage global.

En matière de photosynthèse, tous les rayonnements ne se valent pas. Le rayonnement utile à la photosynthèse est un rayonnement dont les longueurs d'onde s'étendent d'environ 400 à 700 nanomètres (nm). Il s'agit du rayonnement photo-synthétiquement actif (RPA). On parle aussi de bande photo-synthétiquement active pour désigner la bande allant de 400 à 700 nm. Il s'agit d'un rayonnement correspondant à une lumière dite blanche.

Un rayonnement reçu par un végétal dans une plage de longueurs d'onde située à l'extérieur de la bande 400-700 nm, et en particulier en dehors de la bande 400-780 nm, ne lui sera que très peu utile en termes de photosynthèse. Cette bande de longueur d'onde 400-780 nm correspond sensiblement au domaine du visible, c'est-à-dire que le rayonnement émis dans cette bande de longueur d'onde correspond à la lumière visible par l'œil humain.

Le niveau de photosynthèse réalisée par un végétal dépend de la quantité de lumière qu'il reçoit. En effet, plus le végétal est éclairé intensément par une source de lumière, plus il sera capable d'assimiler du dioxyde de carbone en quantité importante.

D'autres paramètres ont évidemment une influence sur le phénomène de photosynthèse comme par exemple la température ambiante, la température de feuille, le taux ambiant de dioxyde de carbone ou encore le taux d'humidité ambiant. Mais en règle général et jusqu'à une certaine limite correspondant au point de saturation du végétal, plus ce dernier reçoit de la lumière, plus il va croitre rapidement de par l'effet de la photosynthèse.

Le point de saturation d'un végétal, ou seuil de saturation, correspond à la quantité d'énergie lumineuse reçue au-delà de laquelle il n'assimilera pas davantage de dioxyde de carbone. Ainsi, au seuil de saturation, la quantité de dioxyde de carbone assimilée par le végétal atteint un plafond qui dépend évidemment non seulement du type de végétal concerné, c'est-à-dire de son espèce, sa variété, son stade de culture mais aussi de conditions environnementales. Au-delà du seuil de saturation, le végétal met en place des mécanismes morphologiques de protection et d'évitement de la lumière au détriment de sa croissance, le taux de photosynthèse décroît. Un seuil critique causera la mort du végétal.

Soumettre un végétal à une quantité d'énergie lumineuse supérieure à son seuil de saturation s'avère donc inutile, puisque défavorable sur le plan économique, et potentiellement néfaste sur le plan biologique. Le végétal n'est pas capable de supporter ce surplus d'énergie et de chaleur engendrée par ce surplus de lumière, et ne l'utilise pas pour produire une biomasse intéressante pour le cultivateur.

Le seuil de saturation, ou seuil de saturation lumineuse, d'un végétal est généralement exprimé en µmol.m⁻².s⁻¹ et désigne un maximum d'une densité de flux de photons reçu par le végétal dans la bande photo-synthétiquement active. Le seuil de saturation d'un végétal dépend donc de la densité de flux de photos produite par le rayonnement photo-synthétiquement actif.
Pour un végétal donné, le seuil de saturation correspond à une valeur maximale d'un nombre de photons photo-synthétiquement actifs, exprimé ici en µmol, reçus par unité de surface, exprimée en mètre carré (m²), et par unité de temps exprimée en seconde.

Pour favoriser une culture intensive, c'est-à-dire pour obtenir une production maximale du végétal cultivé en un temps réduit, il est possible de disposer d'un éclairage artificiel permettant, à tout moment, de compléter de manière adéquate l'éclairage naturel afin que l'éclairage global, combinant éclairage naturel et éclairage artificiel, produise dans la bande photo synthétiquement active une densité de flux de photons qui soit à la fois maximale et strictement inférieure au seuil de saturation du végétal.

Un tel éclairage artificiel est notamment utile pour pallier au manque d'ensoleillement en hiver ou lors de certaines journées particulièrement nuageuses. Un tel éclairage artificiel peut par exemple aussi permettre d'augmenter la durée des jours, c'est-à-dire de fournir une lumière au végétal cultivé avant le lever et/ou après le coucher du soleil.

L'éclairage naturel dépend de facteurs, comme les conditions climatiques extérieures, la période de l'année ou l'emplacement géographique, sur lesquels le cultivateur n'a aucun contrôle. S'il n'a aucun contrôle sur l'intensité lumineuse produite par l'éclairage naturel, le cultivateur équipé d'un dispositif d'éclairage artificiel doit pouvoir influer sur le rayonnement qu'il produit afin de compenser un manque éventuel d'éclairage naturel, et ce en vue d'atteindre un rayonnement cible d'éclairage global, c'est-à-dire notamment une densité de flux de photons cible, constante ou variable, résultant de la combinaison de l'éclairage naturel et de l'éclairage artificiel.

La densité de flux de photons cible dépend notamment de l'espèce et de la variété du végétal cultivé, du stade de développement de la culture, de la densité de végétal par mètre carré et également des objectifs poursuivis par le cultivateur. Ce dernier peut par exemple décider de favoriser une culture rapide et intensive qui ne se fera qu'au détriment de la qualité du produit. Inversement, le cultivateur peut chercher à obtenir un végétal doté de caractéristiques bien particulières qui ne pourront être obtenues qu'en le soumettant à un éclairage modéré lors de certaines périodes de l'année par exemple.

En outre, il n'est généralement pas souhaitable d'éclairer un végétal vingt-quatre heures sur vingt-quatre car il est nécessaire de le laisser reposer dans l'obscurité a minima quelques heures par jour. Cette phase de repos est nécessaire à la translocation des sucres accumulés pendant la phase de jour. La densité de flux de photons cible n'est donc en général pas constante et dépend de multiples facteurs.

Au-delà de considérations purement biologiques, le cultivateur s'intéresse également au coût financier et écologique de sa production végétale, et en particulier au coût induit par la consommation électrique de son dispositif d'éclairage artificiel qui peut vite devenir élevé.

Aux exigences en termes de quantité et de qualité biologiques s'ajoutent donc des exigences purement économiques relatives à la consommation en énergie électrique du dispositif d'éclairage. Dans ce contexte et pour limiter la consommation électrique du dispositif, il conviendra par exemple de veiller à utiliser des lampes présentant un rendement énergétique élevé. Le document US2021/0307254 A1 décrit un système d'éclairage pour la culture de plantes comprenant une source de lumière émettant la lumière nécessaire pour une plante, un contrôleur commandant la source de lumière, et une alimentation électrique fournissant de l'énergie électrique à la source de lumière et/ou au contrôleur selon le préambule de la revendication 1.

### Description générale

En complément de la densité de flux de photons produit par l'éclairage global résultant de l'éclairage artificiel et de l'éclairage naturel, un autre facteur est à prendre en considération. Il s'agit de la qualité de l'éclairage, c'est-à-dire la distribution spectrale de l'énergie produite par l'éclairage. Il est donc important de s'intéresser aux différentes composantes fréquentielles du rayonnement global reçu par le végétal.

En règle général, un végétal est notamment sensible à la même bande de longueur d'onde que celle visible par l'œil humain, c'est-à-dire aux longueurs d'onde allant d'environ 400 à 780 nanomètres correspondant aux couleurs bleu (400 à 500 nm), vert (500 à 600 nm), rouge (600 à 700 nm) et rouge lointain (700 à 780 nm). Cela correspond en effet à la bande de longueur d'onde photo-synthétiquement active. Cependant, certains végétaux absorbent, utilement et dans une certaine mesure souvent très limitée, certains types de rayons ultraviolets.

Pour assurer son développement, un végétal doit donc être exposé à une certaine quantité de différents types de lumière dont le rayonnement UV, notamment car il possède différents types de photorécepteurs sensibles à différentes bandes de longueur d'onde. Chaque photorécepteur d'un végétal, lorsqu'il est stimulé par un signal lumineux, provoque une transduction du signal ou des cascades de signalisation à l'origine du contrôle de la libération des molécules agissant sur la croissance du végétal et favorisant l'apparition de caractéristiques biologiques nécessaires à sa survie dans son environnement.

L'éclairage naturel apporté par le soleil, que ce soit par rayonnement direct ou diffus, permet de stimuler les différents photorécepteurs de chaque végétal existant. En effet, même s'il varie en fonction de l'heure et de la période de l'année, le spectre du rayonnement émis par le soleil reste relativement équilibré et apporte une énergie lumineuse suffisante dans les différentes bandes de longueur d'onde nécessaires à la croissance de tous les végétaux.

S'il permet un certain équilibre et une survie naturelle des différentes espèces, le rayonnement solaire n'est cependant pas optimal en ce qu'il oriente chaque végétal vers des caractéristiques physiologiques particulières qui peuvent par exemple ne pas correspondre à ce qu'un cultivateur recherche.

En outre, la quantité et le type de photorécepteurs varient d'un végétal à un autre, et pour chaque végétal tout au long de sa vie. Cela signifie que chaque végétal a des besoins uniques en termes de qualité de lumière reçue, et que ces besoins évoluent au différents stades de son développement.

Il est donc insuffisant et inefficace de ne chercher à compléter un éclairage naturel qu'en termes d'intensité lumineuse. Un tel complément, s'il permet de compenser un manque d'éclairage naturel, ne permet nullement d'adapter le spectre de l'éclairage global aux besoins particuliers du végétal cultivé.

La présente invention a pour objectif de résoudre tout ou parties des inconvénients mentionnés ci-dessus.

A cette fin, la présente invention a pour objectif de fournir un éclairage artificiel complémentaire d'un éclairage naturel de manière à ce qu'une énergie lumineuse reçue par un végétal, résultant de la combinaison de l'éclairage naturel et de l'éclairage artificiel, présente à tout moment une distribution spectrale particulièrement adaptée au végétal à cultiver.

Un autre objectif de la présente invention est de fournir un éclairage artificiel complémentaire d'un éclairage naturel de manière à ce qu'une énergie lumineuse reçue par un végétal, résultant de la combinaison de l'éclairage naturel et de l'éclairage artificiel, présente à tout moment une distribution spectrale particulièrement adaptée à au moins un objectif particulier d'un cultivateur.

Un autre objectif de la présente invention est de fournir un éclairage artificiel complémentaire d'un éclairage naturel de manière à ce qu'une quantité d'énergie lumineuse reçue par un végétal, résultant de la combinaison de l'éclairage naturel et de l'éclairage artificiel, présente à tout moment une valeur optimale de rayonnement global n'atteignant pas le seuil de saturation du végétal et favorisant le phénomène de photosynthèse au maximum de ce que le végétal est en mesure de réaliser dans son environnement et son état de croissance.

Un autre objectif de la présente invention est de fournir un système d'éclairage artificiel, complémentaire d'un éclairage naturel, qui présente une consommation en énergie électrique raisonnable et un rendement énergétique avantageux.

Le problème technique à la base de l'invention consiste notamment à fournir un éclairage artificiel efficace sur le plan énergétique et qui soit à la fois et à tout moment adapté aux conditions d'ensoleillement, aux besoins du végétal cultivé et aux objectifs de cultivateur.

Un objectif de l'invention est donc de fournir un système d'éclairage, permettant l'atteinte de ces objectifs.

La présente divulgation décrit un procédé de commande d'un dispositif d'éclairage artificiel agencé pour produire un rayonnement destiné à favoriser un développement d'un végétal, ledit dispositif comprenant au moins :
- Un ensemble d'unités d'éclairage primaire agencé pour produire un rayonnement primaire dans une bande de longueur d'onde primaire ;
- Au moins un ensemble d'unités d'éclairage secondaire agencé pour produire un rayonnement secondaire dans une bande de longueur d'onde secondaire, le rayonnement produit par le dispositif d'éclairage artificiel résultant de la combinaison du rayonnement primaire et du rayonnement secondaire;
Le procédé de commande comprenant les étapes suivantes :
- Obtention d'une distribution spectrale énergétique du rayonnement produit par le dispositif d'éclairage artificiel et reçu par le végétal ;
- Détermination, sur une bande de longueur d'onde comprenant au moins la bande de longueur d'onde primaire et la bande de longueur d'onde secondaire, d'une distribution spectrale énergétique d'un rayonnement global résultant de la combinaison de l'éclairage artificiel et d'un éclairage naturel et reçu par le végétal;
- Obtention d'au moins un modèle cible de distribution spectrale énergétique du rayonnement global reçu par le végétal ;
- Détermination d'au moins une commande destinée au dispositif d'éclairage artificiel en fonction de la distribution spectrale énergétique du rayonnement global, du modèle cible et de la distribution spectrale énergétique du rayonnement produit par le dispositif d'éclairage artificiel.

Selon une possibilité, ladite au moins une commande est envoyée au dispositif d'éclairage artificiel de manière à modifier le rayonnement primaire et/ou l'au moins un rayonnement secondaire en vue de modifier la distribution spectrale énergétique du rayonnement produit par le dispositif d'éclairage artificiel et reçu par le végétal.

Selon une possibilité, le végétal comprend une plante, par exemple une plante à feuilles ou une plante à fleurs.

Selon une possibilité, le végétal comprend une plante chlorophyllienne et/ou une plante céréalière et/ou une plante oléagineuse et/ou une plante protéagineuse.

Selon une possibilité, le végétal comprend une plante de viticulture et/ou une plante d'horticulture et/ou un gazon et/ou une plante de maraichage et/ou une plante à racines et tubercules.

Selon une possibilité, le végétal comprend une plante aromatique et/ou une plante d'épices.

Selon une autre possibilité, le végétal comprend un arbre, par exemple un arbre fruitier ou un arbuste.

Selon une autre possibilité, le végétal comprend un légume ou une plante à légumes.

Selon une autre possibilité, le végétal comprend un fruit ou une plante à fruits.

Selon encore une possibilité, le végétal comprend un champignon.

Selon une possibilité, le végétal comprend une pluralité de végétaux appartenant à une même espèce.

Selon encore une possibilité, le végétal comprend une pluralité de végétaux d'une même espèce appartenant à une même variété.

Selon une possibilité, le végétal comprend une pluralité de végétaux ayant des besoins identiques, ou sensiblement identiques, en termes de qualité d'éclairage et/ou de quantité d'éclairage et/ou de durée d'éclairage journalier.

Selon une autre possibilité, le végétal comprend une pluralité de végétaux ayant des besoins identiques, ou sensiblement identiques, en termes de conditions environnementales telles que la température ambiante, la température de feuilles, le taux d'humidité ambiant, le taux de dioxyde de carbone dans l'air ambiant ...etc.

Selon une possibilité, ledit dispositif d'éclairage artificiel est destiné à compléter un rayonnement d'un éclairage naturel.

Selon une autre possibilité, ledit dispositif d'éclairage artificiel est destiné à être disposé dans un environnement dépourvu d'éclairage naturel.

Selon une possibilité, ledit dispositif d'éclairage artificiel comprend au moins une lampe à incandescence et/ou une autre lampe à décharge et/ou ampoule halogène, CMH, MH et/ou une ampoule fluo compacte.

Selon une possibilité, ledit dispositif d'éclairage artificiel comprend au moins une lampe à décharge, par exemple une lampe à vapeur de sodium.

Selon une possibilité, ledit dispositif d'éclairage artificiel comprend au moins une lampe à vapeur de sodium haute pression et/ou une lampe à incandescence et/ou une lampe à décharge et/ou ampoule halogène, CMH, MH et/ou une ampoule fluo compacte.

Selon une possibilité, ledit dispositif d'éclairage artificiel comprend au moins une lampe à diodes électroluminescentes (DEL). L'utilisation de diodes électroluminescente est avantageuse sur le plan économique que ce soit en termes de consommation en énergie électrique ou de durée de vie. Par rapport à d'autres solutions d'éclairage disponible sur le marché, une diode électroluminescente présente en particulier un rendement énergétique élevé.

Selon un exemple de réalisation non limitatif, la bande de longueur d'onde primaire est comprise entre 597 et 700 nm et par exemple entre 622 et 700nm. Selon cet exemple de réalisation, l'ensemble d'unités d'éclairage primaire émet une lumière de couleur rouge.

Selon un exemple de réalisation, le dispositif d'éclairage artificiel comprend un unique ensemble d'unités d'éclairage secondaire.

Selon un exemple de réalisation, le dispositif d'éclairage artificiel comprend une pluralité d'ensembles d'unités d'éclairage secondaires.

Selon un exemple de réalisation, le dispositif d'éclairage artificiel comprend deux ensembles d'unités d'éclairage secondaires : un premier ensemble d'unités d'éclairage secondaire agencé pour produire un premier rayonnement secondaire dans une première bande de longueur d'onde secondaire et un deuxième ensemble d'unités d'éclairage secondaire agencé pour produire un deuxième rayonnement secondaire dans une deuxième bande de longueur d'onde secondaire.

Selon un exemple de réalisation, le dispositif d'éclairage artificiel comprend trois ensembles d'unités d'éclairage secondaires : un premier ensemble d'unités d'éclairage secondaire agencé pour produire un premier rayonnement secondaire dans une première bande de longueur d'onde secondaire, un deuxième ensemble d'unités d'éclairage secondaire agencé pour produire un deuxième rayonnement secondaire dans une deuxième bande de longueur d'onde secondaire et un troisième ensemble d'unités d'éclairage secondaire agencé pour produire un troisième rayonnement secondaire dans une troisième bande de longueur d'onde secondaire.

Selon un exemple de réalisation, le dispositif d'éclairage artificiel comprend quatre ensembles d'unités d'éclairage secondaires : un premier ensemble d'unités d'éclairage secondaire agencé pour produire un premier rayonnement secondaire dans une première bande de longueur d'onde secondaire, un deuxième ensemble d'unités d'éclairage secondaire agencé pour produire un deuxième rayonnement secondaire dans une deuxième bande de longueur d'onde secondaire, un troisième ensemble d'unités d'éclairage secondaire agencé pour produire un troisième rayonnement secondaire dans une troisième bande de longueur d'onde secondaire et un quatrième ensemble d'unités d'éclairage secondaire agencé pour produire un quatrième rayonnement secondaire dans une quatrième bande de longueur d'onde secondaire.

Selon un mode de réalisation, le rayonnement primaire permet une efficacité photonique supérieure et/ou une efficacité photosynthétique supérieure au rayonnement secondaire.

L'efficacité photonique d'une source de rayonnement désigne la valeur du rapport entre le flux de photons émis exprimé en µmol.s⁻¹ et la puissance électrique exprimée en Watt effectivement consommée par la source de rayonnement. Plus le nombre de photons émis par seconde et par watt consommé est élevé, plus l'efficacité photonique de la source du rayonnement est bonne.

Les fabricants de dispositifs d'éclairage, et en particulier les fabricants de dispositifs d'éclairage agricoles et/ou horticoles, communiquent généralement l'efficacité photonique, ou rendement photonique, de leurs produits. De plus, l'efficacité ou rendement photonique d'un dispositif d'éclairage artificiel peut être mesuré et/ou déterminé in situ, en faisant varier la puissance consommée par le dispositif et en mesurant, pour chaque valeur de puissance consommée la quantité de photons émis par seconde.

Selon une possibilité, une émission dans la bande de longueur d'onde primaire permet une efficacité photonique supérieure à l'efficacité photonique que permet une émission dans une bande de longueur d'onde secondaire quelconque.

Selon une possibilité, la bande de longueur d'onde primaire présente une efficacité photonique supérieure à celle que présente chacune des bandes de longueur d'onde secondaires.

Selon une possibilité, une émission dans la bande de longueur d'onde primaire permet une efficacité photosynthétique supérieure à l'efficacité photosynthétique que permet une émission dans une bande de longueur d'onde secondaire quelconque.

Selon une possibilité, la bande de longueur d'onde primaire présente une efficacité photosynthétique supérieure à celle que présente chacune des bandes de longueur d'onde secondaires.

Selon encore une possibilité, la bande de longueur d'onde primaire est plus large que l'au moins une bande de longueur d'onde secondaire, c'est-à-dire que la bande de longueur d'onde primaire comprend une plage de longueur d'onde plus étendue que l'au moins une bande de longueur d'onde secondaire. Par exemple, le rayonnement primaire peut correspondre à la lumière blanche, tandis que l'au moins un rayonnement secondaire à la lumière rouge.

Selon une possibilité, la bande de longueur d'onde primaire et/ou l'au moins une bande de longueur d'onde secondaire comprennent chacune des plages de longueur d'onde discontinues.

Selon un exemple de réalisation, le dispositif d'éclairage artificiel comprend au moins cinq ensembles d'unités d'éclairage secondaires.

Selon un exemple de réalisation non limitatif, au moins une bande de longueur d'onde secondaire est comprise entre 400 et 492 nm, et par exemple entre 420 et 480 nm. Selon cet exemple de réalisation, au moins un ensemble d'unités d'éclairage secondaire émet une lumière de couleur bleue.

Selon un exemple de réalisation non limitatif, au moins une bande de longueur d'onde secondaire est comprise entre 492 et 597 nm, et par exemple entre 492 et 577nm. Selon cet exemple de réalisation, au moins un ensemble d'unités d'éclairage secondaire émet une lumière de couleur verte.

Selon un exemple de réalisation non limitatif, au moins une bande de longueur d'onde secondaire est comprise entre 700 et 800 nm, et par exemple entre 700 et 780nm. Selon cet exemple de réalisation, au moins un ensemble d'unités d'éclairage secondaire émet une lumière de couleur rouge lointain.

Selon un exemple de réalisation non limitatif, au moins une bande de longueur d'onde secondaire est comprise entre 380 et 740 nm, et par exemple entre 400 et 700nm. Selon cet exemple de réalisation, au moins un ensemble d'unités d'éclairage secondaire émet une lumière de couleur blanche. Selon cet exemple de réalisation, la couleur verte, notamment, est apportée par un ensemble de diodes électroluminescentes polychromatiques produisant une couleur blanche et émettant entre 25 et 60 % de son rayonnement dans le vert. Un tel ensemble de diodes électroluminescentes permet notamment une efficacité photonique supérieure à ce que permettrait une diode électroluminescente monochromatique produisant une lumière verte.

Selon un exemple de réalisation non limitatif, au moins une bande de longueur d'onde secondaire est comprise entre 320 et 400 nm, et par exemple entre 340 et 400nm. Selon cet exemple de réalisation, au moins un ensemble d'unités d'éclairage secondaire émet un rayonnement ultraviolet (UV) du type UV-A.

Selon un exemple de réalisation non limitatif, au moins une bande de longueur d'onde secondaire est comprise entre 280 et 320 nm. Selon cet exemple de réalisation, au moins un ensemble d'unités d'éclairage secondaire émet un rayonnement UV du type UV-B.

Selon un exemple de réalisation non limitatif, au moins une bande de longueur d'onde secondaire est comprise entre 200 et 280 nm. Selon cet exemple de réalisation, au moins un ensemble d'unités d'éclairage secondaire émet un rayonnement UV du type UV-C.

D'autres bandes de longueur d'onde primaire et secondaires sont possibles et envisageables. Ainsi, selon une possibilité, au moins un ensemble d'unités d'éclairage secondaire peut émettre un rayonnement infrarouge (IR), par exemple de type proche infrarouge, c'est-à-dire sur une bande de longueur d'onde comprise entre 800 nm et 1,6 µm.

Selon encore une possibilité, au moins un ensemble d'unités d'éclairage secondaire peut émettre un rayonnement infrarouge de longueur d'onde supérieure 1,6 µm.

Les pigments photosynthétiques ou pigments assimilateurs, tels que les chlorophylles (chlorophylle a ou b), les caroténoïdes et les xanthophylles, sont les composés chimiques permettant l'absorption et la transformation de l'énergie lumineuse en énergie chimique chez les organismes effectuant la photosynthèse. Lorsqu'un photon heurte une molécule de pigment photosynthétique, son énergie excite un atome de cette molécule et la fait passer à un état excité, de niveau énergétique élevé. L'énergie accumulée dans la molécule de pigment est libérée pour permettre une suite de réactions d'oxydoréduction appelée photophosphorylation et la molécule donneur d'électron revient alors à son état fondamental.

La lumière rouge, c'est-à-dire la lumière correspondant à un rayonnement émis dans une bande de longueur d'onde comprise entre 622 et 700 nm est la plus absorbée par les végétaux. Cela signifie que le rayonnement émis dans cette bande de longueur d'onde est la plus favorable au mécanisme de photosynthèse et donc à la croissance des végétaux. On dit aussi que la lumière rouge présente un taux élevé d'efficacité photosynthétique.

En particulier, la chlorophylle de type a présente dans les rouges un pic d'absorption autour de 665 nm, tandis que la chlorophylle de type b présente dans les rouges un pic d'absorption autour de 645 nm.

La lumière bleue, c'est-à-dire la lumière émise dans une bande de longueur d'onde comprise entre 420 et 480 nm, est également très bien absorbée par les végétaux. En particulier, la chlorophylle de type a présente dans les bleus un pic d'absorption autour de 430 nm, tandis que la chlorophylle de type b présente dans les bleus un pic d'absorption autour de 445 nm.

Le bétacarotène, de son côté, n'absorbe principalement que le rayonnement émis sur une bande de longueur d'onde comprise entre 400 et 500 nm correspondant à une lumière verte, et présente un pic d'absorption autour de 450 nm.

Selon un exemple de réalisation non limitatif, la bande de longueur d'onde primaire est comprise entre 655 et 675 nm. Selon cet exemple de réalisation, l'énergie d'émission est centrée sur une longueur d'onde égale à 665 nm.

Selon un autre exemple de réalisation non limitatif, la bande de longueur d'onde primaire est comprise entre 635 et 655 nm. Selon cet exemple de réalisation, l'énergie d'émission est centrée sur une longueur d'onde égale à 645 nm.

Selon un exemple de réalisation, au moins un ensemble d'unités d'éclairage secondaire émet un rayonnement secondaire sur une bande de longueur d'onde secondaire comprise entre 420 et 440 nm. Selon cet exemple de réalisation, l'énergie d'émission est centrée sur une longueur d'onde égale à 430 nm

Selon un exemple de réalisation, au moins un ensemble d'unités d'éclairage secondaire émet un rayonnement secondaire sur une bande de longueur d'onde secondaire comprise entre 435 et 455 nm. Selon cet exemple de réalisation, l'énergie d'émission est centrée sur une longueur d'onde égale à 445 nm.

Selon un exemple de réalisation, ledit ensemble d'unités d'éclairage primaire comprend au moins une diode électroluminescente.

Selon une possibilité, ledit au moins un ensemble d'unités d'éclairage comprend une pluralité de diodes électroluminescentes émettant un rayonnement dans une bande de longueur d'onde comprise entre 622 et 700 nm.

Selon un exemple de réalisation, au moins un ensemble d'unités d'éclairage secondaire comprend au moins une diode électroluminescente.

Selon une possibilité, au moins un ensemble d'unités d'éclairage secondaire comprend une pluralité de diodes électroluminescentes émettant un rayonnement secondaire dans une bande de longueur d'onde comprise entre 420 et 480 nm.

Une diode électroluminescente présente la particularité et l'avantage de pouvoir émettre un rayonnement dans une bande de longueur d'onde étroite, par exemple dans une bande d'environ 20 nm. Une diode électroluminescente peut donc émettre un rayonnement centré sur une longueur d'onde donnée, avec une variation d'environ 10nm de part et d'autre de cette longueur d'onde.

L'utilisation de telles diodes électroluminescentes dites diodes chromatiques ou quasi-monochromatiques, pour laquelle l'énergie d'émission est concentrée sur une plage étroite de longueur d'onde, est avantageuse.

En outre, la chaleur dégagée par une diode électroluminescente est modérée par rapport à celle dégagée par d'autres types d'éclairage. Cela permet une meilleure maîtrise des conditions environnementales, et notamment de la température ambiante.

Selon une possibilité, ledit ensemble d'unités d'éclairage primaire comprend au moins une diode électroluminescente émettant une lumière dans une bande de longueur d'onde comprise entre 655 et 675 nm et/ou une diode électroluminescente émettant une lumière dans une bande de longueur d'onde comprise entre 635 et 655 nm.

Selon une autre possibilité, au moins un ensemble d'unités d'éclairage secondaire comprend au moins une diode électroluminescente émettant un rayonnement dans une bande de longueur d'onde comprise entre 420 et 440 nm et/ou une diode électroluminescente émettant un rayonnement dans une bande de longueur d'onde comprise entre 435 et 455 nm.

L'utilisation de telles bandes de longueur d'onde d'émission permet de favoriser le phénomène de photosynthèse, et donc la croissance et le développement racinaire et/ou foliaire du végétal. Cela est avantageux sur le plan de la productivité biologique, puisqu'une photosynthèse intense aura pour effet que le végétal se développera rapidement, correctement et en bonne santé.

Certaines bandes de longueur d'onde présentent également, par rapport à d'autres, une efficacité radiométrique élevée. C'est notamment le cas de la bande de longueur d'onde comprise entre 622 et 700 nm, correspondant à la couleur rouge. Cela signifie qu'une diode électroluminescente émettant dans les rouges produira, pour un watt d'énergie électrique consommé, davantage d'énergie lumineuse, et donc une plus grande puissance lumineuse, qu'une diode électroluminescente émettant par exemple dans les bleus. Ceci est inhérent aux caractéristiques de la technologie DEL.

Certaines bandes de longueur d'onde permettent également, par rapport à d'autres, une efficacité quantique plus élevée. C'est notamment le cas de la bande de longueur d'onde comprise entre 622 nm et 700 nm correspondant à la lumière rouge. Cela signifie qu'une diode électroluminescente émettant dans les rouges produit, pour un watt de puissance lumineuse, davantage de photons qu'une diode électroluminescente émettant par exemple dans les ultraviolets, les bleus ou les verts. Ceci est inhérent aux règles de la physique et en particulier à la loi de Planck.

Selon une possibilité, la bande de longueur d'onde primaire présente une efficacité radiométrique et/ou quantique plus élevée que l'au moins une bande de longueur d'onde secondaire.

Selon une possibilité, le rayonnement primaire permet une efficacité radiométrique et/ou quantique supérieure au rayonnement secondaire.

Chaque végétal possède différents types de photorécepteurs respectivement sensibles à différentes longueurs d'onde. La stimulation des différents types de photorécepteurs d'un végétal est nécessaire pour activer des fonctions utiles à son développement et à sa survie.

A titre d'exemple, les photorécepteurs sensibles à la lumière bleue activent généralement des fonctions relatives à la ramification. Les photorécepteurs sensibles au rayonnement UV activent quant à eux généralement des fonctions relatives à la défense, tandis qu'un rayonnement dont la bande de longueur d'onde est comprise entre 700 et 780 nm favorise généralement l'élongation du végétal.

On distingue plusieurs types de photorécepteurs : les phytochromes sensibles à la lumière rouge et rouge lointain, les phototropines sensibles à la lumière bleue, les cryptochromes sensibles à la lumière bleue et aux rayons UV, les caroténoïdes, les chloroplastes, les chlorophylles...

Tous les végétaux ne comprennent pas tous les mêmes types de photorécepteurs, ni dans la même quantité. Chaque végétal, selon son espèce et sa variété, a donc des besoins particuliers en termes de qualité d'éclairage, c'est-à-dire en termes de distribution spectrale énergétique de la lumière qu'il reçoit. Les besoins d'un végétal donné dépendent également de son stade de maturité, et évoluent donc avec le temps.

Ainsi, chaque végétal réagira différemment des autres à un même rayonnement. Lorsqu'on cultive un végétal donné, il est donc important d'adapter l'éclairage auquel il est soumis.

Un cultivateur se fixe généralement certains objectifs quant au résultat de sa culture. Cela signifie qu'il cherche à obtenir un certain développement du végétal qu'il cultive, en vue d'obtenir un résultat particulier. Un cultivateur cherche donc à adapter la qualité et la quantité de la lumière reçue par le végétal qu'il cultive en vue d'obtenir les objectifs qu'il s'est fixés. La qualité de l'éclairage reçu par un végétal a en effet une influence considérable sur sa croissance et le type de caractéristiques particulières qu'il va développer.

Il est donc avantageux de définir un modèle cible d'une distribution spectrale énergétique du rayonnement reçu par un végétal à cultiver, et de chercher à tout moment à atteindre ce modèle ou tout du moins à s'en rapprocher.

Un modèle cible de distribution spectrale énergétique d'un rayonnement peut définir, pour différentes bandes de longueur d'onde, une quantité d'énergie cible à atteindre.

Selon un exemple de réalisation non limitatif, un modèle cible de distribution spectrale énergétique de rayonnement, qui sera également désigné sous le terme gabarit, peut comprendre une densité de flux de photons primaire cible dans une bande de longueur d'onde primaire allant de 597 à 700 nm, une première densité de flux de photons secondaire cible dans une première bande de longueur d'onde secondaire allant de 400 à 492 nm, une deuxième densité de flux de photons secondaire cible dans une deuxième bande de longueur d'onde secondaire allant de 492 à 597 nm et une troisième densité de flux de photons secondaire cible dans une troisième bande de longueur d'onde allant de 700 à 780 nm.

Pour simplifier l'exemple précédent, on peut considérer que le modèle cible présente dans les rouges une certaine valeur de densité de flux de photons à atteindre, dans les bleus une certaine valeur densité de flux de photons à atteindre, dans les verts une certaine valeur de densité de flux de photons à atteindre, et dans les rouges lointains une certaine valeur de densité de flux de photons à atteindre. Il est également possible de définir un modèle où les bandes correspondant aux différentes couleurs du spectre visible soient affinées, ce qui permettrait d'atteindre un certain type de rouge et/ou un certain type de bleu ...etc.

Bien entendu, un modèle cible, ou gabarit, peut également définir des quantités d'énergie cibles dans d'autres bandes de longueur d'onde, par exemple la bande comprise entre 320 et 400 nm correspondant au rayon UV-A, ou encore une bande comprenant des longueurs d'onde supérieures à 780 nm et correspondant au domaine de l'infrarouge.

On comprend, selon l'exemple précédent, qu'un gabarit définit une valeur absolue d'une quantité d'énergie lumineuse reçue dans chaque bande, et que cette quantité d'énergie lumineuse représente une densité de flux de photons exprimée en µmol.m⁻².s⁻¹

Selon une autre possibilité, un gabarit ou modèle cible peut définir, pour chaque bande de longueur d'onde, une valeur relative sous la forme d'un pourcentage d'une quantité d'énergie lumineuse totale reçue. En reprenant l'exemple précédent des quatre bandes de longueur d'onde correspondant aux lumières rouge, bleue, verte et rouge lointain, on peut définir, en tant que modèle cible, les proportions cibles de la quantité d'énergie lumineuse totale émise dans la bande composée des quatre bandes susmentionnés. Ainsi, sur la bande allant de 400 à 780 nm, le gabarit peut définir que la part de la densité de flux de photons totale soit de 60% dans les rouges, 20 % dans les bleus, 10 % dans les verts et 10% dans les rouges lointains.

Il est avantageux d'utiliser un gabarit définissant, pour chaque bande de longueur d'onde considérée et en valeur absolue exprimée en µmol.m⁻².s⁻¹, une densité de flux de photons. Ainsi, le gabarit définit non seulement la valeur cible à atteindre d'une densité de flux de photons pour chaque bande de longueur d'onde correspondant aux couleurs rouge, bleue, verte et rouge lointain mais également une valeur totale cible d'une densité de flux de photons sur l'intégralité de la bande photo-synthétiquement active, c'est-à-dire la bande allant de 400 à 780 nm correspondant à la lumière blanche. Ladite valeur totale cible est en effet déterminée comme la somme des valeur cible de densité de flux de photons définie pour chacune des bandes de longueur d'onde correspondant aux couleurs rouge, bleu, vert et rouge lointain.

Un tel gabarit permet donc de définir une valeur totale à atteindre, sur la bande photo-synthétiquement active, de la densité de flux de photons reçu par le végétal. Quelle que soit la distribution spectrale énergétique du rayonnement, c'est-à-dire sa proportion de rouge, bleu, vert et rouge lointain, la valeur définie par le gabarit de la densité totale de flux de photons reçu dans la bande photo-synthétiquement active correspond à une valeur totale à atteindre.

Chaque végétal présente en effet un seuil de saturation correspondant à une quantité d'énergie lumineuse photo-synthétiquement active au-delà de laquelle la photosynthèse atteint un plafond. Pour différentes raisons, biologiques et économiques notamment, il n'est pas opportun de soumettre un végétal à un rayonnement présentant une quantité d'énergie lumineuse photo-synthétiquement active supérieure à son seuil de saturation.

Il est donc avantageux que la valeur totale de densité de flux de photons photo-synthétiquement actifs définie par le gabarit soit inférieure au seuil de saturation, et présente si possible un ratio optimal entre le niveau de photosynthèse obtenu et le coût en termes de consommation électrique du dispositif d'éclairage artificiel.

Un gabarit a vocation à être particulièrement adapté à un type de végétal, c'est-à-dire à une variété donnée d'une espèce donnée. Un gabarit peut également dépendre des objectifs particuliers poursuivis par le cultivateur, par exemple en termes de taille d'une tige d'une fleur ou d'une taille d'une feuille d'une plante verte.

En fait, les caractéristiques particulières qu'un cultivateur peut chercher à obtenir sont très variées et dépendent notamment du végétal concerné. S'agissant d'un fruit ou d'un légume, il peut s'agir de sa taille voire de sa forme, de sa couleur, de sa teneur en eau, de son taux de sucre ou d'une saveur particulière.

Si l'on sait qu'il y a un lien particulier entre la quantité de lumière reçue par un végétal et les caractéristiques qu'il développe, ces dernières dépendent aussi de la qualité de la lumière qu'il reçoit, et donc de la distribution spectrale énergétique du rayonnement reçu.

Il est également avantageux d'adapter la quantité et la qualité de la lumière reçue par un végétal en fonction de son stade de maturité. En effet, les besoins en lumière d'un végétal évoluent aux différents stade de son développement, par rapport notamment à la densité de végétal planté au mètre carré, à la charge du végétal en fruits et/ou en fleurs.

En particulier, les besoins en lumière d'une plante à fruits ou à légumes destinés à être récoltés une à deux fois par an évoluent au cours d'une même année. On comprend donc qu'il est avantageux de faire évoluer le gabarit tout au long de l'année afin de l'adapter le mieux possible aux besoins du végétal.

Les besoins en lumière d'un végétal cultivé peuvent même évoluer au cours d'une même journée. Généralement, il est préférable de laisser un végétal reposer dans l'obscurité, ou une quasi-obscurité, un certain nombre d'heures par jour. Durant ces périodes, le gabarit présente donc, pour chaque bande de longueur d'onde couverte, une quantité d'énergie lumineuse égale à zéro.

De plus, il peut être souhaitable, à certains moments de la journée, par exemple en fin de journée, de soumettre un végétal à des flashs intenses d'un type particulier de lumière, par exemple à des flashs de rayons UV, de lumière bleue, blanche, de lumière rouge, de lumière rouge lointain ou encore d'un rayonnement d'infrarouge. Ces flashs permettent notamment de déclencher des réponses photo-morphogéniques chez le végétal.

En outre, le gabarit, ou modèle cible de distribution spectrale énergétique lumineuse, peut également dépendre de conditions environnementales. Notamment, la qualité et/ou la quantité de lumière requise par un végétal peut dépendre de certaines caractéristiques environnementales du milieu dans lequel il évolue.

Ainsi, le gabarit peut dépendre de la température ambiante, de la température de feuille, du taux d'humidité ambiante ou du taux de dioxyde de carbone présent dans l'air ambiant. Le gabarit peut donc évoluer avec le temps en fonction de certaines données reçues par différents capteurs tels qu'un thermomètre, un capteur d'humidité ou encore un capteur de dioxyde de carbone.

On comprend donc que le gabarit ou modèle cible à définir n'est pas forcément fixe ou constant et est destiné à varier selon les périodes de l'année, les moments d'une journée, les conditions environnementales du milieu dans lequel le végétal est cultiver.

Selon un exemple de réalisation, l'étape d'obtention du modèle cible de distribution spectrale énergétique de rayonnement prend en compte au moins une espèce d'un végétal et/ou au moins une variété.

Selon un exemple de réalisation, l'étape d'obtention du modèle cible de distribution spectrale énergétique de rayonnement prend en compte au moins un élément comprenant : un stade de développement d'un végétal et/ou une heure circadienne d'un végétal.

Selon un exemple de réalisation, l'étape d'obtention du modèle cible de distribution spectrale énergétique de rayonnement prend en compte au moins un instant donné de la journée ou de la nuit et/ou au moins une période de l'année.

Selon un exemple de réalisation, l'étape d'obtention du modèle cible de distribution spectrale énergétique de rayonnement prend en compte au moins une donnée environnementale comprenant : une température ambiante et/ou une température de feuille et/ou un taux de dioxyde de carbone dans l'air ambiant et/ou un taux d'humidité ambiante.

Selon un exemple de réalisation, l'étape d'obtention du modèle cible de distribution spectrale énergétique de rayonnement prend en compte au moins un objectif particulier lié à au moins un élément comprenant : un aspect morphologique : comme une taille, une distance internœud, une force du bouquet ou de la hampe etc... et/ou un aspect de qualité de production comme : un aspect du fruit ou de la fleur, une compacité, un diamètre, un taux de sucre, une saveur, une présence en molécules d'intérêt etc...

Selon un exemple de réalisation, le modèle cible de distribution spectrale énergétique varie au cours du temps. En particulier, le modèle cible varie au cours d'une même année. Selon une autre possibilité, le modèle cible varie au cours d'une année calendaire.

Selon un exemple de réalisation, l'étape d'obtention du modèle cible de distribution spectrale énergétique de rayonnement est mis en œuvre périodiquement.

Selon un exemple de réalisation, l'étape d'obtention du modèle cible de distribution spectrale énergétique de rayonnement prend en compte une évolution programmée ou paramétrée du modèle cible.

Selon un exemple de réalisation, l'étape d'obtention du modèle cible de distribution spectrale énergétique de rayonnement prend en compte une collecte d'au moins une information saisie.

Par exemple, ladite au moins une information peut être saisie par un cultivateur, ou par toute personne dûment habilitée à définir ou modifier un gabarit.

Selon un mode de réalisation, l'étape d'obtention de la distribution spectrale énergétique du rayonnement produit par le dispositif d'éclairage artificiel prend en compte au moins un modèle de distribution spectrale énergétique de rayonnement produit par ledit ensemble d'unités d'éclairage primaire et/ou ledit au moins un ensemble d'unités d'éclairage secondaire.

Dans le domaine de l'éclairage horticole, une connaissance précise de certaines des caractéristiques des sources de lumière utilisées est nécessaire afin de garantir leur utilisation optimisée. Concernant les diodes électroluminescentes par exemple, une connaissance de leur tension de seuil, de l'intensité maximale du courant pouvant les traverser, de leur rendement global, de la valeur du flux de photons émis en fonction de la puissance électrique consommée et de la longueur d'onde d'émission sont des éléments à connaître en vue de bien dimensionner sur un plan électrique un système d'éclairage composé de telles diodes électroluminescentes.

Ces éléments sont généralement publiés sur les fiches techniques fournis par les constructeurs et il est donc possible d'en tirer profit en vue de déterminer la distribution spectrale énergétique du rayonnement émis par un dispositif d'éclairage artificiel.

La densité de flux de photons du rayonnement reçu par le végétal et émis par un tel dispositif d'éclairage artificiel dépend également d'autres facteurs comme la distance du végétal à la source lumineuse, la surface totale occupée par le végétal à éclairer ou encore la présence d'un éventuel dispositif optique et/ou réflecteur permettant d'orienter avantageusement le flux de photons vers le végétal.

Selon une possibilité, l'étape d'obtention de la distribution spectrale énergétique du rayonnement produit par le dispositif d'éclairage artificiel prend en compte au moins une distance entre ledit végétal et ledit ensemble d'unités d'éclairage primaire et/ou ledit au moins un ensemble d'unités d'éclairage secondaire.

La densité de flux de photons émis par une lampe horticole est généralement fournie par le fabricant pour différentes distances de la source. Ainsi, connaissant la distance entre le végétal et une source de lumière destiné à son éclairage, il est possible de déterminer, ou à tout le moins estimer la valeur de la densité du flux de photons du rayonnement reçu par le végétal.

Pour certaines installations d'éclairage horticole, il peut être avantageux de procéder à au moins une mesure in situ d'un rayonnement produit artificiellement et reçu par un végétal afin de déterminer précisément la distribution spectrale énergétique du rayonnement.

Selon un mode de réalisation, le procédé de commande d'un dispositif d'éclairage artificiel comprend en outre une étape de collecte d'au moins un signal correspondant à un rayonnement produit par ledit ensemble d'unités d'éclairage primaire et/ou par ledit au moins un ensemble d'unités d'éclairage secondaire, l'étape d'obtention de la distribution spectrale énergétique du rayonnement produit par le dispositif d'éclairage artificiel prenant alors en compte ledit au moins un signal collecté.

Des appareils connus, comme un goniophotomètre ou un spectroradiomètre, sont aptes à réaliser une mesure d'une densité de flux de photons reçus à une longueur d'onde donnée, ou sur une bande de longueur d'onde donnée. Par exemple, il est possible d'utiliser un dispositif muni d'un spectromètre apte à fournir une composition énergétique d'un rayonnement sur le spectre photo-synthétiquement actif. Il est également possible d'utiliser un appareil composé d'au moins une sonde, tel un photo-détecteur et/ou un PARmètre, apte à mesurer une quantité de photons reçus par mètres carrés et par seconde sur une bande de longueur d'onde donnée, par exemple la bande photo-synthétiquement active.

A partir de résultats de mesures menées in situ, il est possible, pour une dispositif d'éclairage artificiel donné, d'établir une relation entre d'une part la densité de flux de photons reçu par un végétal à cultiver dans chacune des bandes de longueur d'onde d'intérêt et d'autre part la puissance consommée par chaque ensemble d'unités d'éclairage faisant partie de l'installation. L'établissement d'une telle relation peut être utile en vue de permettre une commande ultérieure du dispositif d'éclairage artificiel en vue d'atteindre un distribution spectrale énergétique cible du rayonnement.

Selon un mode de réalisation, le procédé de commande d'un dispositif d'éclairage artificiel comprend en outre une étape d'obtention, sur une bande comprenant ladite bande de longueur d'onde primaire et ladite bande de longueur d'onde secondaire, d'une distribution spectrale énergétique du rayonnement produit par l'éclairage naturel.

L'éclairage naturel, c'est-à-dire la lumière naturelle reçue sur terre, par exemple au niveau du sol en un point donné de la surface de la terre, est issue du rayonnement solaire, c'est-à-dire du rayonnement émis par le soleil. L'éclairage naturel se compose d'un rayonnement solaire reçu directement, et d'un rayonnement solaire diffus. Le rayonnement solaire est actif sur tout le spectre électromagnétique, et pas uniquement sur la bande photo-synthétiquement active. En plus de la lumière visible, le rayonnement solaire comprend notamment des rayons ultraviolets et des infrarouges.

En fonction de l'emplacement géographique considéré, il existe des cartes de rayonnement solaire fournissant par exemple la moyenne sur une année de la puissance du rayonnement solaire reçu. Il existe aussi des abaques d'ensoleillement fournissant une moyenne, par exemple une moyenne mensuelle, hebdomadaire voire journalière, de la puissance du rayonnement solaire reçu en un point donné du globe.

Ces abaques permettent de déterminer, ou à tout le moins estimer, la densité de flux de photons du rayonnement solaire reçu en un emplacement géographique donné. En d'autres termes, il est possible, à partir de ces abaques, de déterminer ou d'estimer une densité de flux de photons du rayonnement produit par l'éclairage naturel et reçu en un point donné.

En complément, le spectre du rayonnement solaire est connu. C'est-à-dire qu'est connue la composition énergétique du rayonnement solaire reçu sur terre. Globalement, le spectre de la lumière solaire est relativement équilibré, ce qui signifie que dans la bande photsynthétiquement active, les parts des bleus, des verts, des rouges et des rouges lointains sont assez proches les unes des autres.

Puisqu'il dépend de la position relative du soleil dans le ciel, le spectre du rayonnement solaire évolue au cours de l'année, et même au cours d'une même journée, la lumière du soleil du matin ou du soir ne présentant pas la même distribution spectrale énergétique que le soleil de midi. Mais cette évolution est connue et à partir de cette connaissance et des abaques d'ensoleillement, il est possible de déterminer, ou à tout le moins estimer, la distribution spectrale énergétique du rayonnement solaire reçu à tout moment en un point du globe.

Cela signifie que pour un emplacement géographique donné, il est possible d'estimer, à tout moment, la valeur absolue de la densité de flux de photons issu du rayonnement solaire reçu dans chacune des bandes de longueur d'onde correspondant aux différentes couleurs rouge, bleu, vert, rouge lointain. Il est également possible d'estimer la densité de flux de photons issu du rayonnement solaire reçu dans la bande correspondant aux rayons UV-A Par exemple.

Selon un mode de réalisation, l'étape d'obtention d'une distribution spectrale énergétique du rayonnement produit par l'éclairage naturel prend en compte au moins un modèle de distribution spectrale énergétique de rayonnement d'un éclairage naturel.

Alternativement, il est également possible de déterminer la distribution spectrale énergétique du rayonnement produit par l'éclairage naturel à l'aide de mesures réalisées in situ à l'aide d'appareils adaptés. Ces appareils sont similaires à ceux, décrits plus haut, utilisés pour mesurer une densité de flux de photons issu d'un dispositif d'éclairage artificiel, et pour en déterminer la distribution spectrale énergétique. Ces appareils de mesure sont connus.

Selon un mode de réalisation, l'étape de détermination de la distribution spectrale énergétique du rayonnement global comprend une détermination d'une densité de flux de photons global reçu par ledit végétal sur la bande de longueur d'onde primaire et/ou une détermination d'une densité de flux de photons global reçu par ledit végétal sur la bande de longueur d'onde secondaire.

Selon un mode de réalisation, le procédé de commande d'un dispositif d'éclairage artificiel comprend en outre une étape de collecte d'au moins un signal correspondant à un rayonnement produit par l'éclairage naturel, l'étape d'obtention de la distribution spectrale énergétique du rayonnement produit par l'éclairage naturel prenant alors en compte ledit au moins un signal collecté.

Selon un mode de réalisation, l'étape de détermination de la distribution spectrale énergétique du rayonnement global prend en compte la distribution spectrale énergétique du rayonnement produit par le dispositif d'éclairage artificiel.

Selon un mode de réalisation, l'étape de détermination de la distribution spectrale énergétique du rayonnement global prend en compte la distribution spectrale énergétique du rayonnement produit par l'éclairage naturel.

Le rayonnement global est le produit de la combinaison de l'éclairage artificiel reçu et de l'éclairage naturel. Si l'on obtient d'une part la distribution spectrale énergétique du rayonnement produit par le dispositif d'éclairage artificiel et reçu par le végétal, et d'autre part la distribution spectrale énergétique du rayonnement produit par l'éclairage naturel et reçu par le végétal, il est possible de déterminer la distribution spectrale énergétique du rayonnement global reçu par le végétal.

Pour chaque bande de longueur d'onde considérée, la densité de flux de photons du rayonnement global reçu par le végétal se présente en effet comme la somme de la densité de flux de photons du rayonnement produit par l'éclairage artificiel et reçu par le végétal et de la densité de flux de photos du rayonnement produit par l'éclairage naturel et reçu par le végétal.

Alternativement, il est possible de réaliser une mesure au moyen d'appareils appropriés, comme cela a été présenté pour le rayonnement produit par l'éclairage artificiel et le rayonnement produit par l'éclairage naturel, de la densité de flux de photons reçu par le végétal, par exemple sur l'ensemble de la bande photo-synthétiquement active et/ou sur chacune des bandes de longueur d'onde correspondant aux couleurs rouge, bleu, vert, rouge lointain.

Selon un mode de réalisation, le procédé de commande d'un dispositif d'éclairage artificiel comprend en outre une étape de collecte d'au moins un signal correspondant au rayonnement global reçu par le végétal, l'étape de détermination de la distribution spectrale énergétique du rayonnement global prenant en compte ledit au moins un signal collecté.

Selon un mode de réalisation, le procédé de commande comprend une étape de comparaison entre le modèle cible et la distribution spectrale énergétique du rayonnement global, l'étape de détermination d'au moins une commande prenant en compte au moins un écart entre le modèle cible et la distribution spectrale énergétique du rayonnement global, la commande visant à diminuer ledit écart en prenant en compte la distribution spectrale énergétique du rayonnement produit par le dispositif d'éclairage artificiel.

Ayant déterminé, pour chaque bande de longueur d'onde considérée, la densité de flux de photons global du rayonnement global reçu par le végétal, il est alors possible de comparer cette valeur déterminée à la valeur d'une densité de flux de photons cible définie par le modèle cible ou gabarit. De telles comparaison permettent de détecter la présence d'un éventuel écart, pour au moins une des bandes de longueur d'onde considérée, entre la valeur de la densité du flux de photons global du rayonnement global reçu et la valeur cible définie dans le gabarit.

Selon une possibilité, l'au moins une commande est envoyée au dispositif d'éclairage artificiel de manière à modifier au moins un des rayonnements primaire ou secondaires produits afin de réduire ou à augmenter la quantité de photons émise par l'ensemble d'unités d'éclairage primaire et/ou l'au moins un ensemble d'unités d'éclairage secondaire. Par conséquent, l'au moins une commande est déterminée de manière à réduire ou à augmenter la densité de flux de photons produit par l'éclairage artificiel et reçu par le végétal dans une au moins des bandes de longueur d'onde primaire ou secondaires.

Selon un mode de réalisation, l'étape de comparaison comprend une comparaison, à une densité de flux de photons primaire cible, de ladite densité de flux de photons global reçu par le végétal sur la bande de longueur d'onde primaire et/ou une comparaison, à une densité de flux de photons secondaire cible, de ladite densité de flux de photons global reçu par le végétal sur la bande de longueur d'onde secondaire.

Suite à une détection d'au moins un écart entre une densité de flux de photons du rayonnement global reçu par le végétal dans une des bandes de longueur d'onde considérée, l'étape de détermination de ladite au moins une commande prend alors en compte un tel écart et la commande vise à réduire, et tend à supprimer, ledit écart.

Selon un mode de réalisation, le modèle cible, ou gabarit, est configuré pour évoluer au cours du temps en fonction de différents paramètres, l'étape d'obtention d'au moins un modèle cible prenant en compte au moins un élément parmi :
- Un stade de développement du végétal ;
- Une heure de la journée ;
- Une température ambiante ;
- Une température de feuille ;
- Une absence d'éclairage naturel ;
- Un taux de dioxyde de carbone dans l'air ambiant ;
- Un taux d'humidité ambiant.

Selon une possibilité, l'étape d'obtention dudit au moins un modèle cible est mise en œuvre périodiquement, afin de permettre une prise en compte d'une éventuelle évolution du modèle cible au cours du temps. Comme expliqué, le modèle cible peut varier tout au long d'une année, et même au cours d'une même journée pour prendre en compte certains besoins d'éclairage à des moments particuliers, par exemple en fin de journée ou pendant la nuit.

Selon une possibilité, l'évolution du modèle cible, ou gabarit, est programmée et l'étape d'obtention du modèle cible prend en compte cette évolution programmée. L'étape d'obtention du modèle cible comprend une sous-étape de comparaison entre le modèle cible actuellement utilisé et le modèle cible programmé pour être utilisé à l'heure de réalisation de ladite sous-étape de comparaison. L'étape d'obtention du modèle cible comprend alors une deuxième sous-étape de mise à jour du modèle cible en cas de non correspondance entre le modèle cible en cours d'utilisation et le modèle cible programmé.

Selon une possibilité, l'étape d'obtention du modèle cible est mise à jour régulièrement, plusieurs fois par jour. Par exemple, l'étape d'obtention du modèle cible est réalisée toutes les heures.

Selon une possibilité, l'étape d'obtention d'une distribution spectrale énergétique du rayonnement produit par le dispositif artificiel est mise en œuvre après chaque réception d'une commande destinée au dispositif d'éclairage artificiel et visant à modifier la distribution spectrale énergétique du rayonnement produit par le dispositif d'éclairage artificiel. Ainsi, la distribution spectrale énergétique du rayonnement produit par le dispositif d'éclairage artificiel est connue à tout moment.

La présente divulgation décrit une unité de commande configurée pour commander un dispositif d'éclairage artificiel agencé pour produire un rayonnement destiné à favoriser un développement d'un végétal, ledit dispositif comprenant au moins :
- Un ensemble d'unités d'éclairage primaire agencé pour produire un rayonnement primaire dans une bande de longueur d'onde primaire ;
- Au moins un ensemble d'unités d'éclairage secondaire agencé pour produire un rayonnement secondaire dans une bande de longueur d'onde secondaire ;
L'unité de commande étant apte à mettre en œuvre le procédé de commande décrit précédemment.

L'unité de commande dispose à tout moment du modèle cible de distribution spectrale énergétique du rayonnement global. En outre, à chaque fois que l'unité de commande détermine et envoie une commande destinée à modifier le rayonnement du dispositif d'éclairage artificiel, l'étape d'obtention de la distribution spectrale énergétique du rayonnement produit par le dispositif d'éclairage artificiel est mise en œuvre.

Au cours d'une même journée, le rayonnement produit par l'éclairage naturel, c'est-à-dire le rayonnement solaire direct et diffus reçu en un emplacement géographique donné, évolue constamment. Ainsi, l'étape d'obtention d'une distribution spectrale énergétique du rayonnement produit par l'éclairage naturel peut être mise en œuvre selon une certaine fréquence permettant d'obtenir une distribution spectrale énergétique la plus précise possible.

Selon une possibilité, l'étape d'obtention d'une distribution spectrale énergétique du rayonnement produit par l'éclairage naturel est mise en œuvre toutes les minutes en présence d'un éclairage naturel. Cela signifie qu'en l'absence d'éclairage naturel, et notamment la nuit, il n'est pas nécessaire de mettre en œuvre ladite étape d'obtention étant donné que le rayonnement produit par l'éclairage naturel est alors nul ou sensiblement nul.

Si la distribution spectrale énergétique du rayonnement produit par l'éclairage naturel n'est obtenu que sur la base d'un modèle ou abaque d'ensoleillement, la fréquence avec laquelle l'étape d'obtention de la distribution spectrale énergétique du rayonnement produit par l'éclairage naturel est mise en œuvre dépend du degré de précision fournie par ledit modèle ou abaque.

Selon une possibilité, l'étape d'obtention d'une distribution spectrale énergétique du rayonnement produit par l'éclairage naturel est mise en œuvre une fois par heure, ou une fois toutes les deux heures.

La distribution spectrale énergétique du rayonnement global dépend à la fois de l'éclairage naturel et de l'éclairage artificiel. En fonction de la méthode utilisée pour son obtention, par exemple par mesure directe ou par calculs effectués à partir de modèles et d'abaques, il est avantageux d'adapter la fréquence avec laquelle est réalisée l'étape d'obtention de la distribution spectrale énergétique du rayonnement global. En outre, à chaque fois que le rayonnement produit par le dispositif d'éclairage artificiel est modifié suite à l'envoi d'une commande en provenance de l'unité de commande, la distribution spectrale énergétique du rayonnement global est modifiée.

Selon une possibilité, l'étape d'obtention de la distribution spectrale énergétique du rayonnement global est mise en œuvre après chaque envoi d'une commande provenant de l'unité de commande et à destination du dispositif d'éclairage artificiel.

Selon une possibilité, l'étape d'obtention de la distribution spectrale énergétique du rayonnement global est réalisée une fois toutes les minutes. Selon cette possibilité, l'étape de comparaison entre le modèle cible et la distribution spectrale énergétique du rayonnement global est également réalisée toutes les minutes.

Une telle fréquence permet d'adapter le rayonnement produit par le dispositif d'éclairage artificiel de manière à ce que le rayonnement global reçu par le végétal soit le plus proche possible du gabarit défini.

Selon une autre possibilité, l'étape d'obtention de la distribution spectrale énergétique du rayonnement global est réalisée une fois par heure.

L'unité de commande dispose donc à tout moment du modèle cible, de la distribution spectrale énergétique du rayonnement global, et de la distribution spectrale énergétique du rayonnement produit par le dispositif d'éclairage artificiel. Il est donc apte à déterminer les commandes destinées au dispositif d'éclairage artificiel en fonction de ces trois informations.

La présente invention concerne un système d'éclairage comprenant au moins :
- Une unité de commande;
- Un dispositif d'éclairage artificiel agencé pour produire un rayonnement destiné à favoriser un développement d'un végétal, ledit au moins un dispositif comprenant :
   - Un ensemble d'unités d'éclairage primaire agencé pour produire un rayonnement primaire dans une bande de longueur d'onde primaire, ledit ensemble primaire étant configuré pour fonctionner avec une puissance électrique primaire dans une gamme de puissance électrique délimitée par une puissance électrique primaire maximale de consommation ;
   - Au moins un ensemble d'unités d'éclairage secondaire agencé pour produire un rayonnement secondaire dans une bande de longueur d'onde secondaire, ledit ensemble secondaire étant configuré pour fonctionner avec une puissance électrique secondaire comprise dans une gamme de puissance électrique délimitée par une puissance électrique secondaire maximale de consommation ;
- Une unité d'alimentation en courant électrique agencée pour fournir une puissance électrique nominale comprise dans une gamme de puissance électrique délimitée par une puissance électrique nominale maximale d'alimentation, l'unité d'alimentation étant configurée pour fournir, en réponse à au moins une commande de l'unité de commande, à l'ensemble d'unités d'éclairage primaire une puissance électrique primaire et à l'au moins un ensemble d'unités d'éclairage secondaire une puissance électrique secondaire ;
la puissance électrique primaire maximale de consommation étant comprise dans une gamme de valeur comprise entre 90 et 100% de la puissance électrique nominale maximale d'alimentation.

Selon une possibilité, la puissance électrique primaire maximale de consommation est comprise dans une gamme de valeur comprise entre 80 et 100% de la puissance électrique nominale maximale de consommation.

Selon une possibilité, la puissance électrique primaire maximale de consommation est comprise dans une gamme de valeur comprise entre 95 et 100% de la puissance électrique nominale maximale de consommation.

Selon une possibilité, la puissance électrique primaire maximale de consommation est sensiblement égale à 100% de la puissance électrique nominale maximale de consommation.

Selon un mode de réalisation, la puissance électrique primaire maximale de consommation est supérieure à la puissance électrique secondaire maximale de consommation.

L'ensemble d'unités d'éclairage primaire est en effet dimensionné pour fonctionner avec une puissance électrique primaire maximale supérieure à la puissance électrique secondaire maximale avec laquelle peut fonctionner l'au moins un ensemble d'unités d'éclairage secondaire.

Selon une possibilité, l'ensemble d'unités d'éclairage primaire comprend un nombre d'unités d'éclairage supérieur au nombre d'unités d'éclairage que comprend l'au moins un ensemble d'unités d'éclairage secondaire.

Selon une possibilité, le rayonnement primaire couvre une bande de longueur d'onde plus large que le rayonnement secondaire.

Selon un mode de réalisation, le rayonnement primaire permet une efficacité photonique supérieure et/ou une efficacité photosynthétique supérieure au rayonnement secondaire.

L'efficacité photonique de l'ensemble d'unités d'éclairage primaire est donc supérieure à l'efficacité photonique de l'au moins un ensemble d'unités d'éclairage secondaire. Pour un watt consommé, l'ensemble d'unités d'éclairage primaire émet une plus grande quantité de photons par seconde que l'au moins un ensemble d'unités d'éclairage secondaire.

L'efficacité photosynthétique du rayonnement primaire est supérieure à l'efficacité photosynthétique du rayonnement secondaire. A densité de flux de photons égale, le rayonnement primaire favorise donc davantage le phénomène de photosynthèse que le rayonnement secondaire.

Selon une possibilité, le système d'éclairage comprend au moins un convertisseur de puissance électrique agencé de manière à permettre une variation de la puissance électrique consommé par l'ensemble d'unités d'éclairage primaire et/ou l'au moins un ensemble d'unités d'éclairage secondaire.

Selon l'invention, le système d'éclairage comprend au moins un convertisseur de puissance électrique agencé de manière à permettre une variation de la puissance électrique secondaire.

L'au moins un ensemble d'unités d'éclairage secondaire est donc configuré pour fonctionner avec une puissance électrique secondaire apte à varier sous l'action d'un convertisseur de puissance électrique.

Selon un mode de réalisation, le système d'éclairage comprend :
- Une pluralité d'ensembles d'unités d'éclairage secondaires, chacun desdits ensembles d'unités d'éclairage secondaires étant agencé pour produire un rayonnement secondaire dans une bande de longueur d'onde distincte, chacun desdits ensembles d'unités d'éclairage secondaires étant configuré pour fonctionner avec une puissance électrique secondaire comprise dans une gamme de puissance électrique délimitée par une puissance électrique secondaire maximale de consommation;
- Une pluralité de convertisseurs de puissance électrique, chacun desdits convertisseurs de puissance électrique étant agencé de manière à permettre une variation de la puissance électrique secondaire consommée par un ensemble d'unités d'éclairage secondaire distinct.

Selon une possibilité, au moins un convertisseur électrique de puissance est un circuit d'électronique de puissance.

Selon une possibilité, au moins un convertisseur électrique de puissance est un dispositif électromécanique.

Selon une possibilité, au moins un convertisseur électrique de puissance est un convertisseur de courant continu apte à faire varier l'intensité du courant continu circulant à travers l'ensemble d'unités d'éclairage secondaire.

Selon une possibilité, au moins un convertisseur électrique de puissance convertit une source de courant continu d'un niveau de tension à un autre différent.

Selon une possibilité, au moins un convertisseur électrique de puissance convertit une tension continue en une autre tension continue de plus faible ou plus forte valeur.

Selon une possibilité, au moins un convertisseur électrique de puissance est un convertisseur DC-DC.

Selon la invention, l'unité de commande est agencée pour commander l'au moins un convertisseur de puissance électrique

Selon un mode de réalisation, l'unité de commande est agencée pour commander chaque convertisseur de puissance électrique.

L'unité de commande est apte à élaborer et envoyer des commandes à chaque convertisseur de puissance électrique de manière à faire varier la puissance électrique consommée par chaque ensemble d'unités d'éclairage secondaire. Lesdites commandes peuvent avoir pour effet d'augmenter et/ou diminuer la tension aux bornes de chaque ensemble d'unités d'éclairage secondaire, ce qui permet in fine d'augmenter et/ou réduire la puissance électrique consommée.

Selon la invention, l'unité de commande est agencée pour commander l'unité d'alimentation de manière à permettre une variation de la puissance électrique nominale fournie par l'unité d'alimentation.

L'unité d'alimentation fournit en entrée du dispositif d'éclairage une puissance électrique nominale que peut faire varier l'unité de commande de manière à réduire et/ou à augmenter la puissance électrique primaire consommée par l'ensemble d'unités d'éclairage primaire et/ou éventuellement la puissance électrique secondaire consommée par l'au moins un ensemble d'unités d'éclairage secondaire.

Selon une possibilité, l'unité d'alimentation est agencée pour alimenter directement l'ensemble d'unités d'éclairage primaire, l'ensemble d'unités d'éclairage primaire étant connecté directement à l'unité d'alimentation.

Selon un mode de réalisation, l'unité de commande comprend au moins une première unité de détermination agencée pour déterminer, sur une bande de longueur d'onde comprenant au moins la bande de longueur d'onde primaire et chaque bande de longueur d'onde secondaire, une distribution spectrale énergétique d'au moins un rayonnement reçu par le végétal.

Selon un mode de réalisation, la distribution spectrale énergétique de l'au moins un rayonnement reçu par le végétal comprend une densité de flux de photons reçu par le végétal sur la bande de longueur d'onde primaire, et pour chaque bande de longueur d'onde secondaire, une densité de flux de photons reçu par le végétal sur chaque bande de longueur d'onde secondaire.

Selon un mode de réalisation, le système d'éclairage comprend au moins une unité de détection agencée pour effectuer au moins une mesure d'une densité de flux de photons reçu par le végétal et produit par au moins un rayonnement sur au moins une bande de longueur d'onde.

Selon une possibilité, ladite au moins une unité de détection comprend un goniophotomètre et/ou un spectroradiomètre aptes à réaliser une mesure d'une densité de flux de photons reçus à une longueur d'onde donnée, ou sur une bande de longueur d'onde donnée.

Selon une possibilité, ladite au moins une unité de détection comprend un dispositif muni d'un spectromètre apte à fournir une composition énergétique d'un rayonnement sur le spectre photo-synthétiquement actif et/ou un appareil composé d'au moins une sonde, tel un photo-détecteur, apte à mesurer une quantité de photons reçus par mètres carrés et par seconde sur une bande de longueur d'onde donnée, par exemple la bande photo-synthétiquement active.

Selon un mode de réalisation, l'au moins un rayonnement reçu par le végétal comprend :
- Un rayonnement produit par l'éclairage artificiel ;
- Un rayonnement produit par l'éclairage naturel ;
- Un rayonnement global résultant de la combinaison de l'éclairage artificiel et de l'éclairage naturel.

Selon un mode de réalisation, la première unité de détermination est agencée pour déterminer une distribution spectrale énergétique d'au moins un rayonnement reçu par le végétal en prenant en compte au moins une mesure effectuée par l'au moins une unité de détection.

Selon un mode de réalisation, l'unité de commande comprend une unité d'obtention agencée pour obtenir au moins un modèle cible de distribution spectrale énergétique du rayonnement global reçu par le végétal, l'unité d'obtention comprenant au moins une deuxième unité de détermination configurée pour déterminer, en fonction d'au moins un paramètre, au moins un modèle cible de distribution spectrale énergétique du rayonnement global reçu par le végétal.

Selon une possibilité, l'unité d'obtention est agencée pour obtenir au moins un modèle cible enregistré dans au moins une mémoire de l'unité de commande.

Selon une possibilité, le modèle cible est apte à évoluer au cours du temps.

Selon une possibilité, l'évolution du modèle cible, ou gabarit, est programmée et/ou paramétrée à l'avance.

Selon une possibilité, l'au moins une deuxième unité de détermination est configurée pour déterminer, en fonction d'au moins un paramètre, au moins un modèle cible de distribution spectrale énergétique du rayonnement global reçu par le végétal. Ledit au moins un paramètre peut comprendre au moins un des éléments suivants : un stade de développement du végétal, une heure de la journée, une température ambiante, une température de feuille, une absence d'éclairage naturel, un taux de dioxyde de carbone dans l'air ambiant, un taux d'humidité ambiant, un objectif particulier de développement, une période de l'année.

Selon un mode de réalisation, l'unité de commande comprend une unité de comparaison agencée pour comparer la distribution spectrale énergétique du rayonnement global audit au moins un modèle cible, l'unité de commande étant configurée pour déterminer au moins une commande en prenant en compte au moins un écart entre la distribution spectrale énergétique du rayonnement global et l'au moins un modèle cible, ladite au moins une commande visant à diminuer ledit écart en prenant en compte la distribution spectrale énergétique du rayonnement produit par le dispositif d'éclairage artificiel.

Selon un mode de réalisation, l'unité de comparaison est agencée pour comparer à une densité de flux de photons primaire cible la densité de flux de photons global reçu par le végétal sur la bande de longueur d'onde primaire, et pour chaque bande de longueur d'onde secondaire, pour comparer à une densité de flux de photons secondaire cible correspondant à une bande de longueur d'onde secondaire la densité de flux de photons global reçu par le végétal sur ladite bande de longueur d'onde secondaire.

### Description en référence aux figures

L'invention sera mieux comprise à l'aide de la description détaillée qui est exposée ci-dessous en regard des dessins annexés dans lesquels :
[Fig.1] est un graphique présentant le taux d'absorption du rayonnement lumineux de deux types de photorécepteurs présents dans les végétaux.
[Fig.2] est un graphique présentant le taux d'absorption du rayonnement lumineux de trois types de photorécepteurs présents dans les végétaux.
[Fig.3] présente, sous forme graphique, le spectre de la lumière reçue sur terre en provenance du soleil.
[Fig.4] présente le taux de photosynthèse chez la tomate selon différents types de rayonnements reçus.
[Fig.5] présente un exemple de spectre d'un rayonnement émis par une diode électroluminescente de couleur rouge.
[Fig.6] est un schéma de principe simplifié d'un exemple de réalisation d'un système d'éclairage conforme à l'invention et de son environnement de fonctionnement.
[Fig.7a] et [Fig.7b] représentent, de manière schématique, deux exemples de gabarits ou modèles cibles de distribution spectrale énergétique de rayonnement.
[Fig.8] est un schéma d'un exemple de réalisation d'un système d'éclairage conforme à l'invention.
[Fig.9] est un organigramme représentant un exemple de réalisation d'un procédé de commande d'un dispositif d'éclairage artificiel.
[Fig.10] est un organigramme représentant un deuxième exemple de réalisation d'un procédé de commande d'un dispositif d'éclairage artificiel.

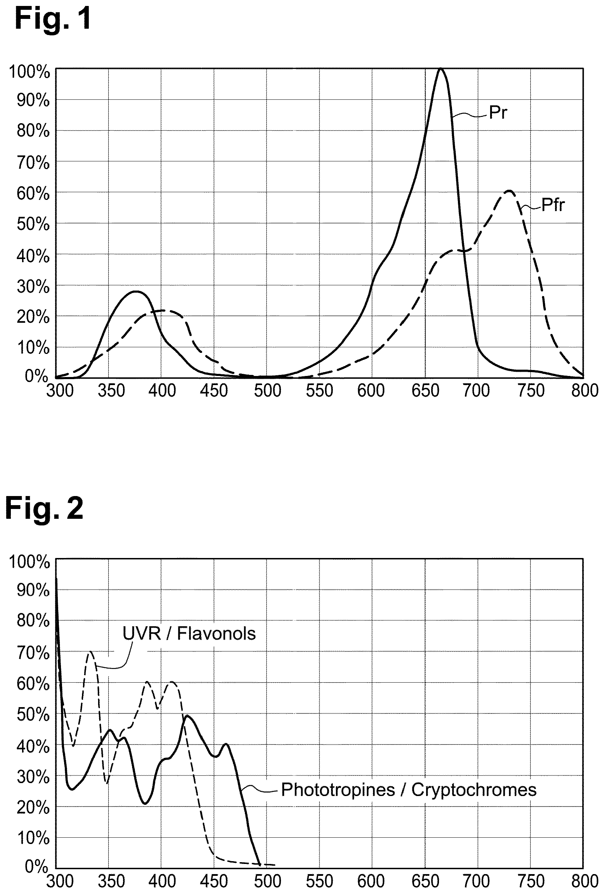

[Fig.1] présente la courbe de l'absorption des rayons lumineux, en fonction de la longueur d'onde, de deux types de photorécepteurs : les phytochromes Pr et les phytochromes Pfr. Comme illustré, les phytochromes sont des photorécepteurs principalement sensibles à la lumière rouge et à la lumière de couleur rouge lointain.

Les phytochromes Pr présentent un pic d'absorption à une longueur d'onde d'environ 665 nm, et que le pic d'absorption des phytochromes Pfr se situe dans le rouge lointain, aux alentours de la longueur d'onde 730 nm.

Les phytochromes sont essentiels au déclenchement de la floraison par exemple, et contrôle différentes fonctions comme l'élongation des semis et des tiges, la germination, le photopériodisme ou encore la synthèse de la chlorophylle.

La lumière rouge, et dans une certaine mesure la lumière rouge lointain, sont donc essentielles au développement des végétaux et permettent des taux d'absorption élevé. En outre et comme expliqué précédemment, une lampe émettant une lumière rouge, par exemple une diode électroluminescente monochromatique centré sur une longueur d'onde située dans les rouges, présente une efficacité photonique élevé.

Lorsqu'on élabore un programme d'éclairage artificiel en vue de favoriser le développement d'un végétal, Il parait donc avantageux de favoriser des lampes émettant une lumière rouge, et ce tant pour des raisons économiques que biologiques.

[Fig.2] présente la courbe de l'absorption des rayons lumineux, en fonction de la longueur d'onde, des phototropines et des cryptochromes d'une part, et des flavonols d'autre part.

Les phototropines et les cryptochromes sont deux types de photorécepteurs présent dans différents végétaux, et en particulier les plantes vertes. Comme illustré, ils assimilent principalement le rayonnement ultraviolet et la lumière bleue, jusqu'à une longueur d'onde d'environ 480 nm. Ces récepteurs de rayons UV et de lumière bleue permettent l'activation de fonctions essentielles aux végétaux, comme la fonction stomatique, l'activation des gènes, l'élongation des tiges, ou encore la synthèse pigmentaire.

Priver un végétal de lumière bleu, et dans une moindre mesure de rayons UV, reviendrait donc à dérégler certaines des fonctions essentielles à son développement.

Un dispositif d'éclairage artificiel doit émettre un rayonnement lumineux présentant une certaine énergie dans les longueurs d'onde correspondant à la lumière bleue.

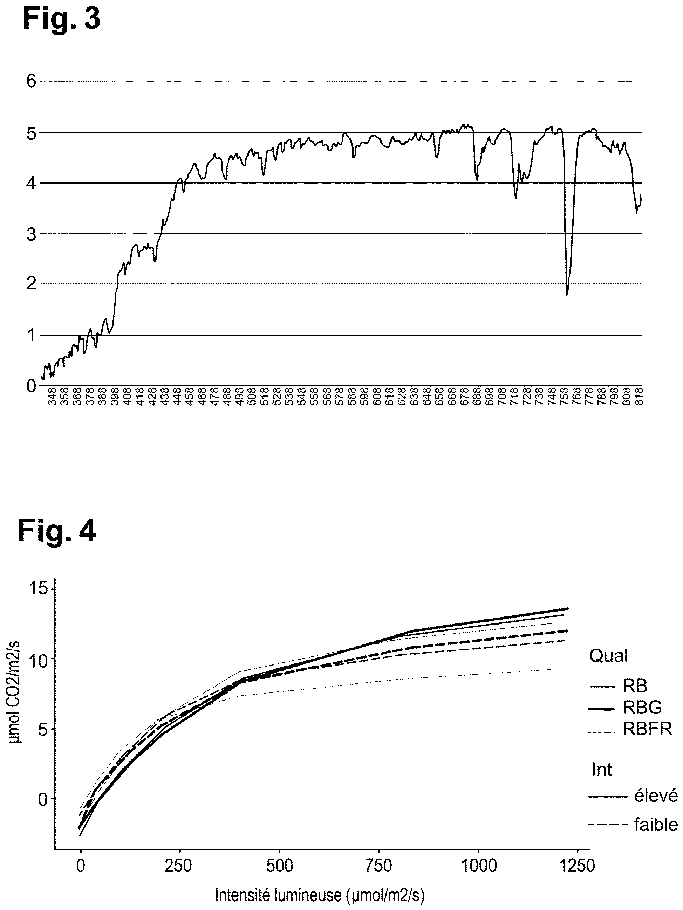

Au niveau du sol terrestre, le spectre de la lumière émise par le soleil et reçue sur terre est, comme illustré à la [Fig.3], globalement équilibré, c'est-à-dire que le soleil fournit, durant une grande partie de la journée, une énergie lumineuse relativement uniforme à toutes les longueurs d'onde de la bande photo-synthétiquement active.

Le spectre de la lumière émise par le soleil et reçu sur terre varie au cours d'une même journée, et tout au long de l'année.

A certains moments de la journée, notamment au petit matin et en fin de journée, la lumière reçue du soleil est rouge, c'est-à-dire que l'énergie lumineuse fournie par le soleil est élevée dans les bandes de longueur d'onde correspondant aux rouge et au rouge lointain, et plus faible dans les bandes de longueur d'onde correspondant au bleu et au vert. La lumière bleue, notamment, est filtrée lorsque le soleil est bas dans le ciel, et que ses rayons proviennent de l'horizon.

A ces moments, le niveau de lumière bleue reçue du soleil n'est généralement plus suffisant aux besoins des végétaux, et il est nécessaire et avantageux de les soumettre à un rayonnement produit artificiellement apportant l'énergie qui leur est nécessaire dans les bandes de longueur d'onde correspondant au bleu.

[Fig.4] présente le niveau de photosynthèse chez la tomate en fonction du type et de la quantité de lumière reçue. Plus précisément, le graphique présente différentes évolutions de l'absorption du dioxyde de carbone par le végétal par rapport à la densité de flux de photons qu'il reçoit. On relève que quelle que soit le type de lumière, par exemple une lumière rouge-bleue (RB), une lumière rouge-bleue-verte (RBG) ou une lumière rouge-bleue-rouge lointain (RBFR), la tomate présente un seuil de saturation au-delà duquel elle n'absorbe quasiment plus de dioxyde de carbone.

Chaque végétal présente un seuil de saturation, c'est-à-dire une certaine quantité de lumière au-delà de laquelle la photosynthèse stagne. Il n'est donc effectivement pas nécessaire d'éclairer au-delà de ce seuil un végétal.

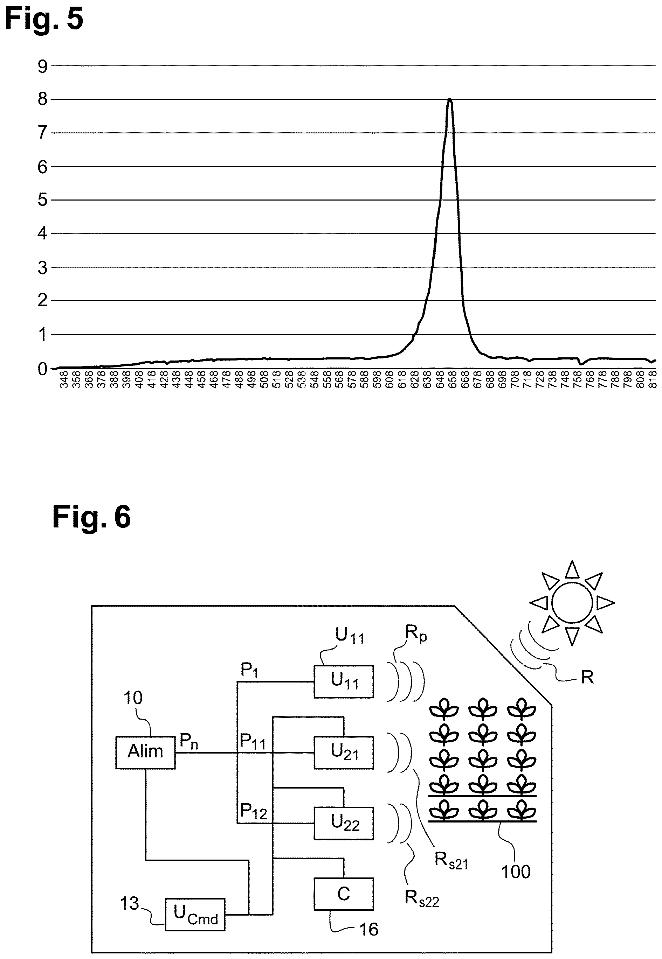

[Fig.5] présente un aspect du spectre du rayonnement émis par une diode électroluminescente. La bande de longueur d'onde couverte par le rayonnement de la diode électroluminescente est centrée sur la longueur d'onde 660 nm. Le spectre d'émission présenté à [Fig.5] est tel qu'à intensité moyenne, la bande de longueur d'onde couverte est d'environ 20 nm.

[Fig.6] présente schématiquement un exemple de système d'éclairage conforme à un mode de réalisation de l'invention. Sur [Fig.6] le système d'éclairage comprend un dispositif d'éclairage artificiel comprenant trois ensembles d'unités d'éclairage : un ensemble primaire U₁₁ émettant un rayonnement primaire Rₚ dans une bande de longueur d'onde primaire, un premier ensemble secondaire U₂₁ émettant un premier rayonnement secondaire Rₛ₂₁ dans une première bande de longueur d'onde secondaire, et un deuxième ensemble secondaire U₂₂ émettant un deuxième rayonnement secondaire Rₛ₂₂ dans une deuxième bande de longueur d'onde secondaire.

Chacun des ensembles d'unités d'éclairage émet donc respectivement un rayonnement vers au moins un végétal 100 dans une bande de longueur d'onde donnée, le végétal recevant également un rayonnement R produit par un éclairage naturel, c'est-à-dire par l'action des rayons solaires reçu en direct ou par diffusion. Le végétal 100 reçoit donc un rayonnement global issu de la combinaison de l'éclairage artificiel produit par le dispositif d'éclairage artificiel et de l'éclairage naturel produit par le rayonnement solaire. Dans le mode de réalisation de [Fig.6], le rayonnement produit par le dispositif d'éclairage artificiel comprend un rayonnement primaire Rₚ et deux rayonnements secondaires distincts Rₛ₂₁ et Rₛ₂₂ produits respectivement par l'ensemble d'unités d'éclairage secondaire U₂₁ et par l'ensemble d'unités d'éclairage secondaire U₂₂.

Le système d'éclairage comprend une unité d'alimentation 10 apte à fournir en entrée du dispositif d'éclairage artificiel une puissance électrique nominale Pₙ d'alimentation. L'unité d'alimentation est agencée pour fournir à l'ensemble d'unités d'éclairage primaire U₁₁ une puissance électrique P₁, au premier ensemble d'unités d'éclairage secondaire U₂₁ une puissance électrique P₂₁ et au deuxième ensemble d'unités d'éclairage secondaire U₂₂ une puissance électrique P₂₂.

Le système d'éclairage comprend également au moins une unité de détection 16 apte à réaliser une collecte d'au moins un signal représentatif d'un rayonnement produit par le dispositif d'éclairage artificiel et/ou par l'éclairage naturel. Selon une possibilité, une telle unité de détection 16 est un goniophotomètre et/ou un spectroradiomètre.

Le système d'éclairage comprend une unité de commande 13 apte à déterminer et à envoyer au moins une commande à destination de l'unité d'alimentation 10 et de chacun des deux ensembles d'unités d'éclairage secondaires U₂₁ et U₂₂.

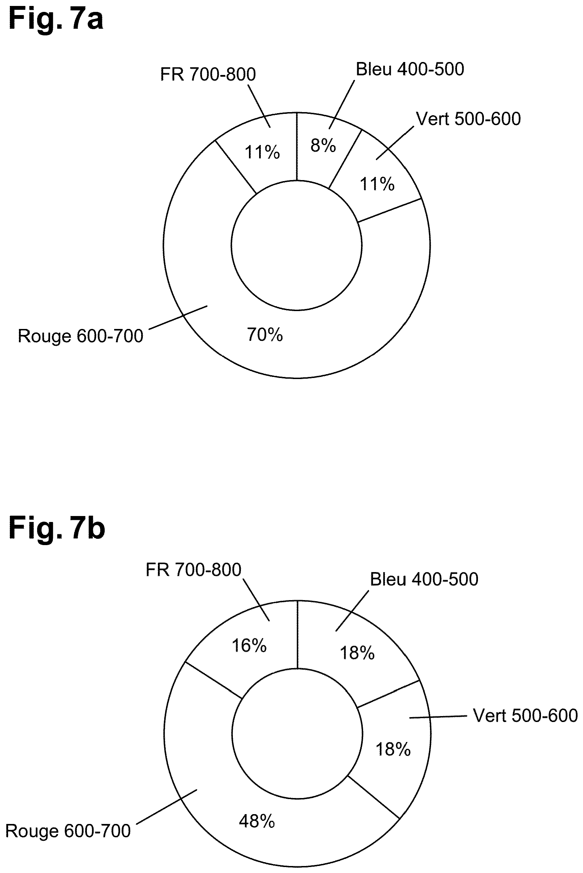

[Fig.7a] et [Fig.7b] présente deux exemples de gabarits ou modèles cibles de distribution spectrale énergétique exprimant, en valeur relative, les densités de flux de photons produits respectivement par quatre rayonnements correspondant respectivement aux couleurs rouge, vert, bleu et rouge lointain. Les deux modèles cibles des [Fig.7a] et [Fig.7b] favorise un rayonnement émis dans une bande de longueur d'onde correspondant à la couleur rouge, c'est-à-dire la bande de longueur d'onde permettant une efficacité photonique et/ou photosynthétique élevée.

Selon une autre possibilité, un modèle cible de distribution spectrale énergétique peut définir, pour chaque bande de longueur d'onde considérée, une valeur absolue de densité de flux de photons cible.

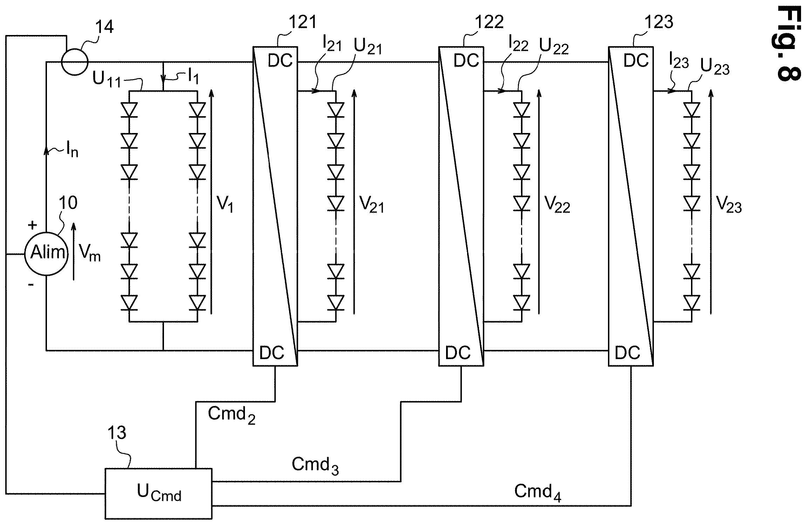

[Fig.8] présente, sous forme simplifiée, un schéma d'un système d'éclairage conforme à un mode de réalisation de l'invention.

Le système d'éclairage comprend une unité d'alimentation 10 qui fournit en entrée d'un dispositif d'éclairage artificiel un courant d'alimentation Iₙ sous une tension Vₙ. L'unité d'alimentation 10 fournit donc en entrée du dispositif d'éclairage artificiel une puissance électrique nominale d'alimentation Pₙ = Vₙ X Iₙ. Cette puissance électrique nominale est comprise dans une gamme de puissance électrique délimitée par une puissance électrique nominale maximale d'alimentation : Pₙₘₐₓ = Vₙₘₐₓ X Iₙₘₐₓ.

Le dispositif d'éclairage artificiel comprend un ensemble d'unités d'éclairage primaire U₁₁ agencé pour produire un rayonnement primaire dans une bande de longueur d'onde primaire et au moins un ensemble d'unités d'éclairage secondaire U₂₁ agencé pour produire un rayonnement secondaire dans une bande de longueur d'onde secondaire.

L'unité d'alimentation 10 est agencée de manière à fournir à l'ensemble d'unités d'éclairage primaire U₁₁ une puissance électrique primaire, et de manière à fournir à l'au moins un ensemble d'unités d'éclairage secondaire U₂₁ une puissance électrique secondaire.

Conformément au mode de réalisation de [Fig.8], l'unité d'alimentation 10 est agencée pour alimenter directement l'ensemble d'unités d'éclairage primaire U₁₁. L'ensemble d'unités d'éclairage primaire U₁₁ est connecté directement à l'unité d'alimentation 10.

Conformément au mode de réalisation de [Fig.8], l'unité d'alimentation 10 est agencée pour alimenter indirectement l'au moins un ensemble d'unités d'éclairage secondaire U₂₁. Ainsi, l'au moins un ensemble d'unités d'éclairage secondaire U₂₁ est connecté indirectement à l'unité d'alimentation 10. Cela signifie qu'au moins un composant électrique est connecté entre l'unité d'alimentation 10 et l'au moins un ensemble d'unités d'éclairage secondaire U₂₁.

L'ensemble primaire U₁₁ est parcouru par un courant électrique primaire d'intensité I₁ et présente à ses bornes une tension électrique V₁. Selon le mode de réalisation non limitatif représenté sur [Fig.8], l'ensemble d'unités d'éclairage primaire U₁₁ comprend deux sous-ensembles d'unités d'éclairage, lesdits sous-ensembles étant connectés l'un à l'autre en parallèle et comprenant un nombre équivalent d'unités d'éclairage connectées en série.

Selon un autre mode de réalisation non représenté, l'ensemble d'unités d'éclairage primaire comprend une pluralité de sous-ensembles d'unités d'éclairage connectés en parallèle les uns et autres et comprenant un nombre équivalent ou distinct d'unités d'éclairage connectées en série.

Selon encore un mode de réalisation non représenté, l'ensemble d'unités d'éclairage primaire comprend un unique ensemble d'unités d'éclairage connectées en série.

L'ensemble d'unités d'éclairage primaire U₁₁ fonctionne avec une puissance électrique primaire de consommation P₁. La puissance électrique primaire consommée par l'ensemble d'unités d'éclairage primaire U₁₁ est P₁ = V₁ X I₁, et est comprise dans une gamme de puissance électrique délimitée par une puissance électrique primaire maximale de consommation P₁ₘₐₓ = V₁ₘₐₓ X I₁ₘₐₓ.

Selon une possibilité, la puissance électrique primaire maximale de consommation P₁ₘₐₓ est comprise dans une gamme de valeur comprise entre 90 et 100% de la puissance électrique nominale maximale de consommation Pₙₘₐₓ.

Selon une possibilité, la puissance électrique primaire maximale de consommation P₁ₘₐₓ est sensiblement égale à 100% de la puissance électrique nominale maximale de consommation Pₙₘₐₓ.

Selon le mode de réalisation non limitatif représenté à [Fig.8], le dispositif d'éclairage artificiel comprend trois ensembles d'unités d'éclairage secondaires U₂₁, U₂₂, U₂₃.

Selon un autre mode de réalisation non représenté, le dispositif d'éclairage artificiel peut comprendre deux ensembles d'unités d'éclairage secondaires.

Selon un autre mode de réalisation non représenté, le dispositif d'éclairage artificiel peut comprendre un unique ensemble d'unités d'éclairage secondaires.

Selon un autre mode de réalisation non représenté, le dispositif d'éclairage artificiel peut comprendre une pluralité d'ensembles d'unités d'éclairage secondaires, par exemple au moins quatre ensemble d'unités d'éclairage secondaires.

L'unité d'alimentation est agencée de manière à fournir à l'ensemble d'unités d'éclairage primaire U₁₁ une puissance électrique primaire, et de manière à fournir respectivement à chaque ensemble secondaire U₂₁, U₂₂, U₂₃ de la pluralité d'ensembles d'unités d'éclairage secondaires une puissance électrique secondaire donnée P₂₁, P₂₂ et P₂₃.

Selon le mode de réalisation non limitatif représenté à [Fig.8], chaque ensemble d'unités d'éclairage secondaire U₂₁, U₂₂, U₂₃ comprend une unique branche d'unités d'éclairage connectées en série.

Selon un autre mode de réalisation non représenté, au moins un ensemble d'unités d'éclairage secondaire peut comprendre au moins deux sous-ensemble d'unités d'éclairage secondaires, lesdits au moins deux sous-ensembles secondaires étant connectés en parallèle entre eux, lesdits au moins deux sous-ensembles secondaires comprenant un nombre similaire ou distinct d'unités d'éclairage connectées en série.

Selon le mode de réalisation non limitatif présenté à [Fig.8], un premier ensemble d'unités d'éclairage secondaire U₂₁ est parcouru par un premier courant électrique secondaire d'intensité I₂₁ et présente à ses bornes une première tension électrique secondaire V₂₁. Le premier ensemble d'unités d'éclairage secondaire U₂₁ fonctionne avec une première puissance électrique secondaire de consommation P₂₁ = V₂₁ X I₂₁, ladite première puissance électrique secondaire de consommation P₂₁ étant comprise dans une gamme de puissance électrique délimitée par une première puissance électrique secondaire maximale de consommation P₂₁ₘₐₓ = V₂₁ₘₐₓ X I₂₁ₘₐₓ.

Selon le mode de réalisation non limitatif présenté à [Fig.8], un deuxième ensemble d'unités d'éclairage secondaire U₂₂ est parcouru par un deuxième courant électrique secondaire d'intensité I₂₂ et présente à ses bornes une deuxième tension électrique secondaire V₂₂. Le deuxième ensemble d'unités d'éclairage secondaire U₂₂ fonctionne avec une deuxième puissance électrique secondaire de consommation P₂₂ = V₂₂ X I₂₂, ladite deuxième puissance électrique secondaire de consommation P₂₂ étant comprise dans une gamme de puissance électrique délimitée par une deuxième puissance électrique secondaire maximale de consommation P₂₂ₘₐₓ = V₂₂ₘₐₓ X I₂₂ₘₐₓ.

Selon le mode de réalisation présenté à [Fig.8], un troisième ensemble d'unités d'éclairage secondaire U₂₃ est parcouru par un troisième courant électrique secondaire d'intensité I₂₃ et présente à ses bornes une troisième tension électrique V₂₃. Le troisième ensemble d'unités d'éclairage secondaire U₂₃ fonctionne avec une troisième puissance électrique secondaire de consommation P₂₃ = V₂₃ X I₂₃, ladite troisième puissance électrique secondaire de consommation P₂₃ étant comprise dans une gamme de puissance électrique délimitée par une troisième puissance électrique secondaire maximale de consommation P₂₃ₘₐₓ = V₂₃ₘₐₓ X I₂₃ₘₐₓ.

Selon une possibilité, la puissance électrique primaire maximale de consommation P₁ₘₐₓ est supérieure à la première puissance électrique secondaire maximale de consommation P₂₁ₘₐₓ.

Selon une possibilité, la puissance électrique primaire maximale de consommation P₁ₘₐₓ est supérieure à la deuxième puissance électrique secondaire maximale de consommation P₂₂ₘₐₓ.

Selon une possibilité, la puissance électrique primaire maximale de consommation P₁ₘₐₓ est supérieure à la troisième puissance électrique secondaire maximale de consommation P₂₃ₘₐₓ.

Selon une possibilité, la puissance électrique primaire maximale de consommation P₁ₘₐₓ est supérieure à chacune des puissances électriques secondaires maximales de consommation P₂₁ₘₐₓ, P₂₂ₘₐₓ, P₂₃ₘₐₓ.

Selon une possibilité, l'ensemble d'unités d'éclairage primaire U₁₁ produit un rayonnement primaire dans une bande de longueur d'onde différente de la bande de longueur d'onde dans laquelle est produit un rayonnement secondaire par l'au moins un ensemble d'unités d'éclairage secondaire.

Selon une possibilité, l'ensemble d'unités d'éclairage primaire U₁₁ produit un rayonnement primaire dans une bande de longueur d'onde plus large que la bande de longueur d'onde dans laquelle est produit un rayonnement secondaire par l'au moins un ensemble d'unités d'éclairage secondaire. La bande de longueur d'onde primaire comprend donc une plage de longueur d'onde plus étendue que la bande de longueur d'onde secondaire.

Selon une possibilité, chaque ensemble d'unités d'éclairage secondaire U₂₁, U₂₂, U₂₃ de la pluralité d'ensembles d'unités d'éclairage secondaires produit un rayonnement secondaire dans une bande de longueur d'onde distincte.

Selon une possibilité, l'ensemble d'unités d'éclairage primaire U₁₁ comprend un nombre d'unités d'éclairage supérieur au nombre d'unités d'éclairage que comprend l'au moins un ensemble d'unités d'éclairage secondaire U₂₁.

Selon une possibilité, l'ensemble d'unités d'éclairage primaire U₁₁ comprend un nombre d'unités d'éclairage supérieur au nombre d'unités d'éclairage que comprend respectivement chaque ensemble secondaire de la pluralité d'ensembles d'unités d'éclairage secondaires U₂₁, U₂₂, U₂₃.

Selon une possibilité, le rayonnement primaire produit par l'ensemble d'unités d'éclairage primaire U₁₁ permet une efficacité photonique supérieure à l'efficacité photonique que permet le rayonnement secondaire produit par l'au moins un ensemble d'unités éclairage secondaire.

Selon une possibilité, le rayonnement primaire produit par l'ensemble d'unités d'éclairage primaire U₁₁ permet une efficacité photonique supérieure à l'efficacité photonique que permet le rayonnement secondaire produit respectivement par chaque ensemble secondaire de la pluralité d'ensembles d'unités éclairage secondaires U₂₁, U₂₂, U₂₃.

Selon une possibilité, le rayonnement primaire produit par l'ensemble d'unités d'éclairage primaire U₁₁ permet une efficacité photosynthétique supérieure à l'efficacité photosynthétique que permet le rayonnement secondaire produit par l'au moins un ensemble d'unités éclairage secondaire.

Selon une possibilité, le rayonnement primaire produit par l'ensemble d'unités d'éclairage primaire U₁₁ permet une efficacité photosynthétique supérieure à l'efficacité photosynthétique que permet le rayonnement secondaire produit respectivement par chaque ensemble secondaire de la pluralité d'ensembles d'unités éclairage secondaires U₂₁, U₂₂, U₂₃.

Selon une possibilité, le rayonnement primaire produit par l'ensemble d'unités d'éclairage primaire U₁₁ permet une efficacité radiométrique et/ou quantique supérieure à l'efficacité photonique que permet le rayonnement secondaire produit par l'au moins un ensemble d'unités éclairage secondaire.

Selon une possibilité, l'au moins un ensemble d'unités d'éclairage secondaire et l'ensemble d'unités d'éclairage primaire sont agencés de manière à pouvoir être connectés en parallèle.

Selon une possibilité, l'ensemble d'unités d'éclairage primaire et chaque ensemble secondaire de la pluralité d'ensembles d'unités d'éclairage secondaires sont agencés de manière à pouvoir être connectés en parallèle.

Selon le mode de réalisation non limitatif représenté à [Fig.8], le dispositif d'éclairage artificiel comprend au moins un convertisseur de puissance électrique 121 agencé de manière à permettre une variation de la puissance électrique secondaire consommée par l'au moins un ensemble d'unités d'éclairage secondaire U₂₁.

Selon le mode de réalisation non limitatif représenté à [Fig.8], le dispositif d'éclairage artificiel comprend trois convertisseurs de puissance électrique 121, 122, 123. Le convertisseur de puissance électrique 121 est agencé de manière à permettre une variation de la puissance électrique secondaire P₂₁ consommée par l'ensemble d'unités d'éclairage secondaire U₂₁. Le convertisseur de puissance électrique 122 est agencé de manière à permettre une variation de la puissance électrique secondaire P₂₂ consommée par l'ensemble d'unités d'éclairage secondaire U₂₂. Le convertisseur de puissance électrique 123 est agencé de manière à permettre une variation de la puissance électrique secondaire P₂₃ consommée par l'ensemble d'unités d'éclairage secondaire U₂₃.

Selon une possibilité, au moins un convertisseur électrique de puissance est un convertisseur DC-DC.

Selon le mode de réalisation non limitatif représenté à [Fig.8], chaque convertisseur électrique de puissance 121, 122, 123 est un convertisseur DC-DC.

Un convertisseur DC-DC est une alimentation à découpage qui convertit une tension continue en une autre tension continue de plus faible ou plus forte valeur.

Selon une possibilité, au moins un convertisseur de puissance électrique permet l'application d'une variation de la tension électrique aux bornes de l'au moins un ensemble d'unités d'éclairage secondaire.

Selon une possibilité, chaque convertisseur de puissance électrique permet l'application d'une variation de la tension électrique secondaire aux bornes de l'ensemble d'unités d'éclairage secondaire auquel il est connecté.

L'application d'une variation de la tension électrique secondaire aux bornes d'un ensemble d'unités d'éclairage secondaire implique une variation de la puissance secondaire consommée par ledit ensemble d'unités d'éclairage secondaire.

Selon encore une possibilité, au moins un convertisseur électrique de puissance est un convertisseur de courant continu apte à faire varier l'intensité du courant continu circulant à travers l'au moins un ensemble d'unités d'éclairage secondaire. Une telle variation de l'intensité du courant continu permet de faire varier la puissance électrique consommée par l'au moins un ensemble d'unités d'éclairage secondaire.

Selon le mode de réalisation non limitatif représenté à [Fig.8], l'unité de commande 13 est agencée de manière à pouvoir commander au moins un convertisseur de puissance électrique.

Selon le mode de réalisation non limitatif représenté à [Fig.8], l'unité de commande 13 est agencée de manière à pouvoir commander chaque convertisseur DC-DC.

Selon une possibilité, l'unité de commande 13 est agencée de manière à pouvoir commander l'unité d'alimentation. Selon cette possibilité, l'unité de commande est agencée de manière pouvoir appliquer une variation de la puissance électrique nominale Pₙ fournie par l'unité d'alimentation.

Selon le mode de réalisation non limitatif représenté à [Fig.8], le système d'éclairage comprend au moins un détecteur de courant 14 agencé pour détecter un courant électrique d'intensité Iₙ que fournit l'unité d'alimentation 10. Le détecteur de courant 14 est donc apte à mesurer l'intensité Iₙ du courant électrique nominal fourni en entrée du dispositif d'éclairage artificiel par son unité d'alimentation 10. Le détecteur de courant 14 communique avec l'unité de commande 13 via une liaison sans fil ou filaire, et lui fournit donc à tout moment la valeur Iₙ de l'intensité du courant électrique fournit par l'unité d'alimentation 10.

L'unité de commande 13 est agencée pour déterminer et envoyer au moins une première commande cmd1 à destination de l'unité d'alimentation 10 en vue d'appliquer une variation de la puissance électrique nominale Pₙ fournie par l'unité d'alimentation 10.

La commande Cmd₁ est apte à réduire et/ou à augmenter la puissance électrique nominale Pₙ fournie par l'unité d'alimentation 10 en entrée du dispositif d'éclairage artificiel. La commande Cmd₁ tend donc à réduire ou à augmenter la puissance électrique P₁ consommée par l'ensemble d'unités d'éclairage primaire U₁₁. Ainsi, la commande Cmd₁ a notamment pour effet de réduire ou d'augmenter le nombre de photons émis par seconde par l'ensemble d'unités d'éclairage U₁₁, ce qui entraine une réduction ou une augmentation de la valeur de la densité de flux de photons reçu par le végétal sur la bande de longueur d'onde primaire.

L'unité de commande 13 est agencée pour déterminer et envoyer au moins une deuxième commande cmd2 au convertisseur de puissance électrique 121 de manière à appliquer une variation de la puissance électrique secondaire P₂₁ consommée par l'ensemble d'unités d'éclairage secondaire U₂₁.

La commande Cmd₂ est apte à réduire et/ou à augmenter la puissance électrique P₂₁ consommée par le premier ensemble d'unités d'éclairage secondaire U₂₁. Ainsi, la commande Cmd₂ a pour effet de réduire et/ou d'augmenter le nombre de photons émis par seconde par le premier ensemble d'unités d'éclairage secondaire U₂₁, ce qui entraine une réduction ou une augmentation de la valeur de la densité de flux de photons reçu par le végétal sur la première bande de longueur d'onde secondaire.

L'unité de commande 13 est agencée pour déterminer et envoyer au moins une troisième commande cmd3 au convertisseur de puissance électrique 122 de manière à appliquer une variation de la puissance électrique secondaire P₂₂ consommée par l'ensemble d'unités d'éclairage secondaire U₂₂.

La commande Cmd₃ est apte à réduire et/ou à augmenter la puissance électrique P₂₂ consommée par le deuxième ensemble d'unités d'éclairage secondaire U₂₂. Ainsi, la commande Cmd₃ a pour effet de réduire et/ou d'augmenter le nombre de photons émis par seconde par le deuxième ensemble d'unités d'éclairage secondaire U₂₂, ce qui entraine une réduction ou une augmentation de la valeur de la densité de flux de photons reçu par le végétal sur la deuxième bande de longueur d'onde secondaire.

L'unité de commande 13 est agencée pour envoyer au moins une quatrième commande cmd4 au convertisseur de puissance électrique 123 de manière à appliquer une variation de la puissance électrique secondaire P₂₃ consommée par l'ensemble d'unités d'éclairage secondaire U₂₃.

La commande Cmd₄ est apte à réduire et/ou à augmenter la puissance électrique P₂₃ consommée par le deuxième ensemble d'unités d'éclairage secondaire U₂₃. Ainsi, la commande Cmd₄ a pour effet de réduire et/ou d'augmenter le nombre de photons émis par seconde par le troisième ensemble d'unités d'éclairage secondaire U₂₃, ce qui entraine une réduction ou une augmentation de la valeur de la densité de flux de photons reçu par le végétal sur la troisième bande de longueur d'onde secondaire.

Selon une possibilité, le système d'éclairage comprend également au moins une unité de détection 16 représentée à [Fig.6]. L'unité de détection 16 est agencée pour collecter au moins un signal correspondant à un rayonnement, ci-après signal de rayonnement. L'unité de détection 16 est apte à effectuer au moins une mesure du signal collecté e/ou une mesure en rapport avec le signal collecté.

Selon une possibilité, l'unité de détection 16 est apte à mesurer un flux de photons émis, exprimé en µmol.s⁻¹, correspondant au signal de rayonnement collecté par l'unité de détection 16.

Selon une possibilité, l'unité de détection 16 est apte à mesurer une densité de flux de photons reçu en µmol.m⁻².s⁻¹ correspondant au signal de rayonnement collecté par l'unité de détection 16. Par exemple, l'unité de détection est un PARmètre.

Selon une possibilité, le système d'éclairage comprend au moins une unité de détection 16 agencée pour collecter le rayonnement primaire produit par l'ensemble d'unités d'éclairage primaire U₁₁.

Selon une possibilité, le système d'éclairage comprend au moins une unité de détection 16 agencée pour collecter le rayonnement secondaire produit par le premier ensemble d'unités d'éclairage secondaire U₂₁.

Selon une possibilité, le système d'éclairage comprend au moins une unité de détection 16 agencée pour collecter le rayonnement secondaire produit par le deuxième ensemble d'unités d'éclairage secondaire U₂₂.

Selon une possibilité, le système d'éclairage comprend au moins une unité de détection 16 agencée pour collecter le rayonnement secondaire produit par le troisième ensemble d'unités d'éclairage secondaire U₂₃.

Selon une possibilité, le système d'éclairage comprend au moins une unité de détection agencée pour collecter le rayonnement total produit globalement par le dispositif d'éclairage artificiel, c'est-à-dire résultant de la combinaison du rayonnement primaire et des rayonnements secondaires.

Selon une possibilité, le système d'éclairage comprend au moins une unité de détection 16 agencée pour collecter le rayonnement produit par l'éclairage naturel.

Selon une possibilité, le système d'éclairage comprend au moins une unité de détection 16 agencée pour collecter le rayonnement global résultant de la combinaison de l'éclairage artificiel et de l'éclairage naturel.

Selon une possibilité, le système d'éclairage comprend au moins une unité de détection 16 agencée pour mesurer une densité de flux de photons reçu par un végétal et correspondant au rayonnement produit par l'éclairage naturel.

Selon une possibilité, le système d'éclairage comprend au moins une unité de détection 16 agencée pour mesurer une densité de flux de photons reçu par un végétal et correspondant au rayonnement produit par le dispositif d'éclairage artificiel.

Selon une possibilité, le système d'éclairage comprend au moins une unité de détection 16 agencée pour mesurer une densité de flux de photons reçu par un végétal et correspondant au rayonnement global résultant de la combinaison de l'éclairage artificiel et de l'éclairage naturel.

Selon une possibilité, le système d'éclairage comprend au moins une unité de détection 16 agencée pour mesurer une densité de flux de photons reçu par un végétal et correspondant au rayonnement primaire produit par l'ensemble d'unités d'éclairage primaire U₁₁.

Selon une possibilité, le système d'éclairage comprend au moins une unité de détection 16 agencée pour mesurer un flux de photons émis correspondant au rayonnement primaire produit par l'ensemble d'unités d'éclairage primaire U₁₁.

Selon une possibilité, le système d'éclairage comprend au moins une unité de détection 16 agencée pour mesurer une densité de flux de photons reçu par un végétal et correspondant au rayonnement secondaire produit par le premier ensemble d'unités d'éclairage secondaire U₂₁.

Selon une possibilité, le système d'éclairage comprend au moins une unité de détection 16 agencée pour mesurer un flux de photons émis correspondant au rayonnement secondaire produit par le premier ensemble d'unités d'éclairage secondaire U₂₁.

Selon une possibilité, le système d'éclairage comprend au moins une unité de détection agencée pour mesurer une densité de flux de photons reçu par un végétal et correspondant au rayonnement secondaire produit par le deuxième ensemble d'unités d'éclairage secondaire U₂₂.

Selon une possibilité, le système d'éclairage comprend au moins une unité de détection 16 agencée pour mesurer un flux de photons émis correspondant au rayonnement secondaire produit par le deuxième ensemble d'unités d'éclairage secondaire U₂₂.

Selon une possibilité, le système d'éclairage comprend au moins une unité de détection agencée pour mesurer une densité de flux de photons reçu par un végétal et correspondant au rayonnement secondaire produit par le troisième ensemble d'unités d'éclairage secondaire U₂₃.

Selon une possibilité, le système d'éclairage comprend au moins une unité de détection agencée pour mesurer un flux de photons émis correspondant au rayonnement secondaire produit par le troisième ensemble d'unités d'éclairage secondaire U₂₃.

Selon une possibilité, au moins une unité de détection 16 comprend un goniophotomètre et/ou un spectroradiomètre aptes à réaliser une mesure d'une densité de flux de photons reçus à une longueur d'onde donnée, ou sur une bande de longueur d'onde donnée.

Selon une possibilité, au moins une unité de détection 16 comprend un dispositif muni d'un spectromètre apte à fournir une composition énergétique d'un rayonnement sur le spectre photo-synthétiquement actif et/ou un appareil composé d'au moins une sonde, tel un photo-détecteur et/ou PARmètre, apte à mesurer une quantité de photons reçus par mètres carrés et par seconde sur une bande de longueur d'onde donnée, par exemple la bande photo-synthétiquement active.

A partir de résultats de mesures menées in situ, il est possible, pour un système d'éclairage, d'établir une relation entre d'une part la densité de flux de photons reçu par un végétal à cultiver dans chacune des bandes de longueur d'onde et d'autre part la puissance consommée par chaque ensemble d'unités d'éclairage faisant partie de l'installation et émettant chacun dans une bande de longueur d'onde donnée. L'établissement d'une telle relation est utile en vue de permettre une commande ultérieure du dispositif d'éclairage artificiel en vue de tendre à atteindre à tout moment une distribution spectrale énergétique cible du rayonnement global.

L'unité de commande comprend par exemple un microcontrôleur comprenant au moins un processeur, au moins une mémoire vive, au moins une mémoire morte ou unité de stockage, au moins une interface d'entrées-sorties comprenant un certain nombre de ports d'entrées-sorties permettant notamment d'envoyer et/ou de recevoir des données vers et/ou en provenance du dispositif d'éclairage.

En particulier, l'interface entrées-sorties permet à l'unité de commande d'envoyer des commandes vers le dispositif d'éclairage, et en particulier vers chaque convertisseur de puissance électrique. De plus, l'interface entrées-sorties du microcontrôleur permet de recevoir des données en provenance du dispositif d'éclairage par exemple relatives par exemple à la puissance électrique consommée par chaque ensemble d'unités d'éclairage du dispositif d'éclairage.

L'interface entrées-sorties du microcontrôleur est également apte à recevoir des données en provenance de l'au moins une unité de détection 16 et de différentes unités périphériques appartenant à l'unité de commande ou connectées à cette dernière.

Selon une possibilité, l'unité de commande comprend au moins une première unité de détermination agencée pour déterminer au moins une densité de flux de photons reçu par le végétal sur au moins une bande de longueur d'onde.

Selon une possibilité, l'unité de commande comprend au moins une première unité de détermination agencée pour déterminer, sur la base de modèles et/ou d'abaques d'ensoleillement, une densité de flux de photons reçu par le végétal sur la bande de longueur d'onde primaire et correspondant au rayonnement produit par l'éclairage naturel.

Selon une possibilité, les modèles et/ou abaques d'ensoleillement peuvent être obtenus à partir de données fournies par un logiciel spécialisé. De tels modèles et/ou abaques peuvent dépendre de données saisonnières historiques par exemple, et/ou de prévisions météorologiques. De tels modèles et/ou abaques permettent d'estimer précisément le niveau d'ensoleillement, c'est-à-dire la densité de flux de photons produit par le rayonnement solaire et reçu à un emplacement géographique d'intérêt.

Selon une possibilité, l'unité de commande comprend au moins une première unité de détermination agencée pour déterminer, sur la base de modèle ou d'abaques d'ensoleillement, et sur chaque bande de longueur d'onde secondaire, une densité de flux de photons reçu par le végétal et correspondant au rayonnement produit par l'éclairage naturel.

Selon une possibilité, l'unité de commande comprend au moins une première unité de détermination agencée pour déterminer, sur la base de modèle ou d'abaques d'ensoleillement, sur une bande de longueur d'onde comprenant au moins la bande de longueur d'onde primaire et chacune des bandes secondaires de la pluralité de bandes de longueur d'onde secondaires, la distribution spectrale énergétique du rayonnement produit par l'éclairage naturel et reçu par le végétal.

Selon une possibilité, l'unité de commande comprend au moins une première unité de détermination agencée pour déterminer, à partir de la puissance électrique consommée par l'ensemble d'unités d'éclairage primaire et de l'efficacité photonique de l'ensemble d'unités d'éclairage primaire, le flux de photons émis, en µmol.s⁻¹, par l'ensemble d'unités d'éclairage primaire.

Selon une possibilité, l'unité de commande comprend au moins une première unité de détermination agencée pour déterminer, à partir de la puissance électrique consommée par l'au moins un ensemble d'unités d'éclairage secondaire et de l'efficacité photonique dudit au moins un ensemble d'unités d'éclairage secondaire, le flux de photons émis, en µmol.s⁻¹, par ledit ensemble d'unités d'éclairage secondaire. Une telle détermination peut être réalisée pour chaque ensemble d'unités d'éclairage secondaire.

Selon une possibilité, l'unité de commande comprend au moins une première unité de détermination agencée pour déterminer, en tenant compte du flux de photons émis en µmol.s⁻¹ par l'ensemble d'unités d'éclairage primaire et notamment de la distance séparant le végétal dudit ensemble d'unités d'éclairage primaire, la densité de flux de photons en µmol.m⁻².s⁻¹ reçu par le végétal dans la bande de longueur d'onde primaire et correspondant au rayonnement primaire produit par l'ensemble d'unités d'éclairage primaire.

Selon une possibilité, l'unité de commande comprend au moins une première unité de détermination agencée pour déterminer, en tenant compte du flux de photons émis en µmol.s⁻¹ par l'au moins un ensemble d'unités d'éclairage secondaire et notamment de la distance séparant le végétal dudit au moins un ensemble d'unités d'éclairage secondaire, la densité de flux de photons en µmol.m⁻².s⁻¹ reçu par le végétal dans la bande de longueur d'onde secondaire d'émission dudit au moins un ensemble d'unités d'éclairage secondaire et correspondant au rayonnement secondaire produit par ledit au moins un ensemble d'unités d'éclairage secondaire. Une telle détermination peut être réalisée pour chaque ensemble d'unités d'éclairage secondaire.

L'unité de commande comprend donc au moins une première unité de détermination apte à établir une relation directe entre une densité de flux de photons reçu par le végétal dans la bande de longueur d'onde primaire et correspondant au rayonnement primaire produit par l'ensemble d'unités d'éclairage primaire et la puissance électrique consommée par l'ensemble d'unités d'éclairage primaire.

De manière analogue, l'unité de commande comprend donc au moins une première unité de détermination apte à établir une relation directe entre une densité de flux de photons reçu par le végétal dans une bande de longueur d'onde secondaire et correspondant au rayonnement secondaire produit par l'au moins un ensemble d'unités d'éclairage secondaire et la puissance électrique consommée par l'au moins un ensemble d'unités d'éclairage secondaire. Une telle relation peut être établie pour chaque ensemble d'unité d'éclairage secondaire.

L'établissement de telles relations permet une commande efficace de l'ensemble d'unités d'éclairage primaire et de chacun des ensembles d'unités d'éclairage secondaires en vue d'atteindre un objectif précis de distribution spectrale énergétique du rayonnement produit par le dispositif d'éclairage artificiel.

Selon une possibilité, l'unité de commande comprend au moins une première unité de détermination agencé pour déterminer, sur la base à la fois : d'abaques d'ensoleillement, des puissances électriques consommées respectivement par l'ensemble d'unités d'éclairage primaire et chacun des ensembles d'unités d'éclairage secondaires, des efficacités photoniques respectives de chaque ensemble d'unités d'éclairage primaire et secondaire et de la distance du végétal à chaque ensemble d'unités d'éclairage, la distribution spectrale énergétique, sur une bande de longueur d'onde comprenant au moins la bande de longueur d'onde primaire et chaque bande de longueur d'onde secondaire, du rayonnement global résultant de l'éclairage artificiel et de l'éclairage naturel.

Selon une possibilité, l'unité de commande comprend une unité d'obtention agencée pour obtenir au moins un modèle cible de distribution spectrale énergétique du rayonnement global reçu par le végétal.

Selon une possibilité, l'unité d'obtention comprend une deuxième unité de détermination configurée pour déterminer, en fonction d'au moins un paramètre, au moins un modèle cible de distribution spectrale énergétique du rayonnement global reçu par le végétal. Ledit au moins un paramètre peut comprendre au moins un des éléments suivants : Un stade de développement du végétal, une heure de la journée, une température ambiante, une absence d'éclairage naturel, un taux de dioxyde de carbone dans l'air ambiant, un taux d'humidité ambiant, un objectif particulier de développement, une période de l'année.

Selon une possibilité, au moins un modèle cible est stocké dans au moins une unité de stockage de l'unité de commande.

Selon une possibilité, l'évolution du modèle cible, ou gabarit, est programmée et/ou paramétrée à l'avance.

Selon une possibilité, l'unité de commande comprend au moins une interface homme-machine permettant à au moins un utilisateur d'interagir avec l'unité de commande du système d'éclairage. En particulier, l'interface homme-machine permet à au moins un utilisateur d'interagir avec l'unité de commande 13. Un utilisateur habilité est donc apte, au moyen de l'interface homme-machine, de saisir des informations visant à commander le dispositif d'éclairage artificiel par l'intermédiaire de l'unité de commande 13.

Selon une possibilité, une modification peut être appliquée au modèle cible sur la base d'au moins une information saisie par un utilisateur. Un utilisateur habilité peut donc prendre la main sur le système d'éclairage de manière à adapter lui-même son spectre d'émission à un besoin ponctuel particulier.

Selon une possibilité, le système d'éclairage comprend au moins un capteur agencé pour capter et/ou détecter et/ou mesurer au moins une donnée environnementale parmi une température ambiante et/ou une température de feuilles e/ou un taux d'humidité ambiant et/ou un taux de dioxyde de carbone dans l'air ambiant. Ledit au moins un capteur peut comprendre un capteur de température comme un thermomètre, et/ou un capteur d'humidité et/ou un capteur de dioxyde de carbone.

Selon une possibilité, une modification peut être appliquée au modèle cible sur la base d'au moins une donnée détectée et/ou mesurée et/ou captée par ledit au moins un capteur. On comprend donc que le modèle cible peut varier selon différents paramètres.

Selon une possibilité, l'unité de commande comprend au moins une unité de comparaison agencée pour comparer à au moins un modèle cible la distribution spectrale énergétique du rayonnement global résultant de la combinaison de l'éclairage naturel et de l'éclairage artificiel.

Selon une possibilité, l'unité de comparaison est agencée pour détecter au moins un écart entre l'au moins un modèle cible et la distribution spectrale énergétique du rayonnement global résultant de la combinaison de l'éclairage naturel et de l'éclairage artificiel.

L'au moins un modèle cible de distribution spectrale énergétique du rayonnement global, ou gabarit, comprend une densité de flux de photons primaire cible correspondant à la bande de longueur d'onde primaire et, pour chaque bande de longueur d'onde secondaire, une densité de flux de photons secondaire cible.

La distribution spectrale énergétique du rayonnement global reçu par le végétal comprend une densité de flux de photons global reçu par le végétal sur la bande de longueur d'onde primaire et, pour chaque bande de longueur d'onde secondaire, une densité de flux de photons global reçu par le végétal respectivement sur chaque bande de longueur d'onde secondaire.

Selon une possibilité, l'unité de comparaison est agencée pour comparer, à la densité de flux de photons primaire cible définie par le modèle cible, la densité de flux de photons global reçu par le végétal sur la bande de longueur d'onde primaire. L'unité de comparaison est également agencée pour comparer, à une densité de flux de photons secondaire cible correspondant à une bande de longueur d'onde secondaire donnée, la densité de flux de photons global reçu par le végétal sur ladite bande de longueur d'onde secondaire donnée.

Selon une possibilité, l'unité de comparaison est agencée pour déterminer et/ou détecter un écart entre une densité de flux de photons primaire cible et la densité de flux de photons global reçu par le végétal sur la bande de longueur d'onde primaire. L'unité de comparaison est également agencée pour déterminer et/ou détecter un écart entre une densité de flux de photons secondaire cible correspondant à une bande de longueur d'onde secondaire donnée et la densité de flux de photons global reçu par le végétal sur ladite bande de longueur d'onde secondaire donnée.

Selon une possibilité, l'unité de commande est configurée pour déterminer au moins une commande visant à réduire au moins un écart détecté et/ou déterminé par l'unité de comparaison.

Selon une possibilité, l'unité de commande est configurée pour déterminer une commande visant à réduire un écart détecté par l'unité de comparaison en tenant compte de la distribution spectrale énergétique du rayonnement produit par le dispositif d'éclairage artificiel.

Selon une possibilité, l'unité de comparaison est agencée pour comparer à une densité de flux de photons primaire cible la densité de flux de photons global reçu par le végétal sur la bande de longueur d'onde primaire.

Selon une possibilité, l'unité de comparaison est agencée pour comparer à une densité de flux de photons secondaire cible correspondant à une bande de longueur d'onde secondaire la densité de flux de photons global reçu par le végétal sur ladite bande de longueur d'onde secondaire.

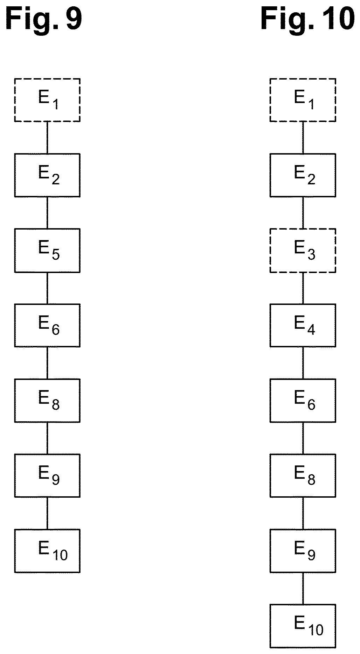

[Fig.9] représente un exemple de réalisation du procédé de commande d'un dispositif d'éclairage artificiel .

Dans une étape optionnelle E₁, au moins un signal correspondant à un rayonnement produit par un ensemble d'unités d'éclairage primaire et/ou à au moins un ensemble d'unités d'éclairage secondaire est collecté, par exemple par un goniophotomètre ou un spectroradiomètre.

Dans une étape E₂, la distribution spectrale énergétique du rayonnement produit par le dispositif d'éclairage artificiel est obtenue, par exemple à partir de modèle d'émission du dispositif d'éclairage artificiel ou de mesures préalablement réalisées établissant une relation entre la puissance consommée par chaque ensemble d'unités d'éclairage composant le dispositif d'éclairage artificiel et la densité de flux de photons reçu par le végétal sur chaque bande de longueur d'onde primaire et secondaires.

Selon une autre possibilité, l'étape d'obtention E₂ de la distribution spectrale énergétique du rayonnement produit par le dispositif d'éclairage artificiel prend en compte l'au moins un signal collecté à l'étape optionnelle E₁.

Dans une étape E₅, au moins un signal correspondant au rayonnement global reçu par le végétal et résultant de la combinaison de l'éclairage naturel et de l'éclairage artificiel est collecté, par exemple par un goniophotomètre ou un spectroradiomètre.

Dans une étape E₆, une distribution spectrale énergétique d'un rayonnement global reçu par le végétal et résultant de la combinaison de l'éclairage artificiel et d'un éclairage naturel est déterminée. Selon le mode de réalisation de [Fig.9], l'étape E₆ de détermination de la distribution spectrale énergétique du rayonnement global prend en compte le signal collecté à l'étape E₅.

Dans une étape E₈, au moins un modèle cible de distribution spectrale énergétique du rayonnement global reçu par le végétal est obtenu, ledit modèle cible définissant une densité de flux de photons cible à atteindre sur chacune des bandes de longueur d'onde primaire et secondaires.

Dans une étape E₉, la distribution spectrale énergétique déterminée à l'étape E₆ du rayonnement global reçu par le végétal est comparée au modèle cible obtenu à l'étape E₈. L'étape de comparaison E₉ consiste à comparer, pour chacune des bandes de longueur d'onde primaire et secondaires, la densité de flux de photons du rayonnement global effectivement reçu par le végétal sur une bande de longueur d'onde donnée avec la densité de flux de photons définie par le modèle cible sur cette bande de longueur d'onde. L'étape de comparaison E₉ permet donc de détecter et déterminer un éventuel écart entre une densité de flux de photons reçu sur une bande de longueur d'onde primaire ou secondaire et la densité de flux de photons cible définie par le modèle cible pour la bande de longueur d'onde primaire ou secondaire correspondante.

Enfin, dans une étape E₁₀, au moins une commande destinée au dispositif d'éclairage artificiel est déterminée en fonction de la distribution spectrale énergétique du rayonnement global déterminée à l'étape E₆, du modèle cible obtenu à l'étape E₈ et de la distribution spectrale énergétique obtenue à l'étape E₂ du rayonnement produit par le dispositif d'éclairage artificiel.

La commande déterminée à l'étape E₁₀ prend en compte le résultat de la comparaison réalisée à l'étape E₉ entre le modèle cible obtenu à l'étape E₈ et la distribution spectrale énergétique du rayonnement global déterminée à l'étape E₆. En particulier, la détermination de la commande réalisée à l'étape E₁₀ prend en compte au moins un écart déterminé à l'étape de comparaison E₉ entre le modèle cible et la distribution spectrale énergétique du rayonnement global, la commande visant à réduire ledit au moins un écart.

Enfin, ladite au moins une commande déterminée à l'étape E₁₀ est envoyée au dispositif d'éclairage artificiel en vue de modifier la puissance consommée par au moins un des ensembles d'unités d'éclairage primaire ou secondaires.

Selon une possibilité, l'au moins une commande déterminée à l'étape E₁₀ est destinée à un au moins des convertisseurs de puissance électrique 121,122,123 et vise à réduire ou à augmenter la puissance électrique secondaire consommée par au moins un des ensembles d'unités d'éclairage secondaires U₂₁, U₂₂, U₂₃ de manière à réduire ou augmenter la quantité de photons émise par seconde par ledit au moins un ensemble d'unités d'éclairage secondaire et a fortiori à réduire ou augmenter la densité de flux de photons produit par l'éclairage artificiel et reçu par le végétal dans la bande de longueur d'onde secondaire correspondante.

Selon une possibilité, l'au moins une commande déterminée à l'étape E₁₀ est destinée à l'unité d'alimentation 10 et vise à réduire ou à augmenter la puissance électrique fournie par l'unité d'alimentation 10 en entrée du dispositif d'éclairage artificiel, et donc notamment à réduire ou à augmenter la puissance électrique primaire consommée par l'ensemble d'unités d'éclairage primaire U₁₁, ce qui a pour conséquence de réduire ou augmenter la quantité de photons émise par seconde par l'ensemble d'unités d'éclairage primaire et donc a fortiori la densité de flux de photons produit par l'éclairage artificiel et reçu par le végétal dans la bande de longueur d'onde primaire.
[Fig.10] est un organigramme représentant le procédé de commande selon un deuxième mode de réalisation.

Dans une étape optionnelle E₁, au moins un signal correspondant à un rayonnement produit par un ensemble d'unités d'éclairage primaire et/ou à au moins un ensemble d'unités d'éclairage secondaire est collecté, par exemple par un goniophotomètre ou un spectroradiomètre.

Dans une étape E₂, la distribution spectrale énergétique du rayonnement produit par le dispositif d'éclairage artificiel est obtenue, par exemple à partir de modèle d'émission du dispositif d'éclairage artificiel ou de mesures préalablement réalisées établissant une relation entre la puissance consommée par chaque ensemble d'unités d'éclairage composant le dispositif d'éclairage artificiel et la densité de flux de photons reçu par le végétal sur chaque bande de longueur d'onde primaire et secondaires.

Selon une autre possibilité, l'étape d'obtention E₂ de la distribution spectrale énergétique du rayonnement produit par le dispositif d'éclairage artificiel prend en compte l'au moins un signal collecté à l'étape optionnelle E₁.

Dans une étape optionnelle E₃, au moins un signal correspondant à un rayonnement produit par l'éclairage naturel est collecté, par exemple par un goniophotomètre ou un spectroradiomètre.

Dans une étape E₄, la distribution spectrale énergétique du rayonnement reçu par le végétal et produit par l'éclairage naturel est obtenue. Selon une possibilité, la distribution spectrale énergétique obtenue à l'étape E₄ est déterminée en prenant en compte au moins un modèle de distribution spectrale énergétique de rayonnement de l'éclairage naturel. Un tel modèle peut par exemple être déterminé sur la base d'abaques d'ensoleillement ou de calendriers solaires.
Selon une autre possibilité, la distribution spectrale énergétique obtenue à l'étape E₄ est obtenue en prenant en compte ledit au moins un signal collecté à l'étape E₃.

Dans une étape E₆, la distribution spectrale énergétique d'un rayonnement global reçu par le végétal et résultant de la combinaison de l'éclairage artificiel et d'un éclairage naturel est déterminée. Selon le mode de réalisation de [Fig.10], l'étape E₆ de détermination de la distribution spectrale énergétique du rayonnement global prend en compte la distribution spectrale énergétique obtenue à l'étape E₂ du rayonnement produit par le dispositif d'éclairage artificiel et reçu par le végétal et/ou la distribution spectrale énergétique obtenue à l'étape E₄ du rayonnement produit par l'éclairage naturel.

Dans une étape E₈, au moins un modèle cible de distribution spectrale énergétique du rayonnement global reçu par le végétal est obtenu, ledit modèle cible définissant une densité de flux de photons cible à atteindre sur chacune des bandes de longueur d'onde primaire et secondaires.

Dans une étape E₉, la distribution spectrale énergétique déterminée à l'étape E₆ du rayonnement global reçu par le végétal est comparée au modèle cible obtenu à l'étape E₈. L'étape de comparaison E₉ consiste à comparer, pour chacune des bandes de longueur d'onde primaire et secondaires, la densité de flux de photons du rayonnement global effectivement reçu par le végétal sur une bande de longueur d'onde donnée avec la densité de flux de photons définie par le modèle cible sur cette bande de longueur d'onde. L'étape de comparaison E₉ permet donc de détecter et déterminer un éventuel écart entre une densité de flux de photons reçu sur une bande de longueur d'onde primaire ou secondaire et la densité de flux de photons cible définie par le modèle cible pour la bande de longueur d'onde primaire ou secondaire correspondante.

Enfin, dans une étape E₁₀, au moins une commande destinée au dispositif d'éclairage artificiel est déterminée en fonction de la distribution spectrale énergétique du rayonnement global déterminée à l'étape E₆, du modèle cible obtenu à l'étape E₈ et de la distribution spectrale énergétique obtenue à l'étape E₂ du rayonnement produit par le dispositif d'éclairage artificiel.

La commande déterminée à l'étape E₁₀ prend en compte le résultat de la comparaison réalisée à l'étape E₉ entre le modèle cible obtenu à l'étape E₈ et la distribution spectrale énergétique du rayonnement global déterminée à l'étape E₆. En particulier, la détermination de la commande réalisée à l'étape E₁₀ prend en compte au moins un écart déterminé à l'étape de comparaison E₉ entre le modèle cible et la distribution spectrale énergétique du rayonnement global, la commande visant à réduire ledit au moins un écart.

Enfin, ladite au moins une commande déterminée à l'étape E₁₀ est envoyée au dispositif d'éclairage artificiel en vue de modifier la puissance consommée par au moins un des ensembles d'unités d'éclairage primaire ou secondaires.

Selon une possibilité, l'au moins une commande déterminée à l'étape E₁₀ est destinée à un au moins des convertisseurs de puissance électrique 121,122,123 et vise à réduire ou à augmenter la puissance électrique secondaire consommée par au moins un des ensembles d'unités d'éclairage secondaires U₂₁, U₂₂, U₂₃ de manière à réduire ou augmenter la quantité de photons émise par seconde par ledit au moins un ensemble d'unités d'éclairage secondaire et a fortiori à réduire ou augmenter la densité de flux de photons produit par l'éclairage artificiel et reçu par le végétal dans la bande de longueur d'onde secondaire correspondante.

Selon une possibilité, l'au moins une commande déterminée à l'étape E₁₀ est destinée à l'unité d'alimentation 10 et vise à réduire ou à augmenter la puissance électrique fournie par l'unité d'alimentation 10 en entrée du dispositif d'éclairage artificiel, et donc notamment à réduire ou à augmenter la puissance électrique primaire consommée par l'ensemble d'unités d'éclairage primaire U₁₁, ce qui a pour conséquence de réduire ou augmenter la quantité de photons émise par seconde par l'ensemble d'unités d'éclairage primaire et donc a fortiori la densité de flux de photons produit par l'éclairage artificiel et reçu par le végétal dans la bande de longueur d'onde primaire.

Le procédé de commande d'un dispositif d'éclairage artificiel permet d'adapter en continu le spectre d'émission du dispositif d'éclairage artificiel de manière à compléter l'éclairage naturel afin que le rayonnement global reçu par le végétal présente une distribution spectrale énergétique le plus proche possible d'un modèle cible de distribution spectrale énergétique définissant pour chaque bande de longueur d'onde primaire ou secondaire une densité de flux de photons cibles permettant un développement optimal du végétal.

Le système d'éclairage et son procédé de commande permettent de produire un rayonnement artificiel favorisant une bande de longueur d'onde dite primaire par rapport à des bandes de longueur d'onde dite secondaire tout en présentant une consommation en énergie électrique plus raisonnable et un rendement énergétique plus avantageux que les solutions existantes.

Le système d'éclairage et son procédé de commande permettent de produire un rayonnement artificiel favorisant une bande de longueur d'onde plus large et/ou plus efficace que les autres sur les plans photosynthétique et/ou photonique sans pour autant déséquilibrer le spectre du rayonnement global reçu par le végétal.

Le système d'éclairage et son procédé de commande permettent de produire un rayonnement artificiel permettant d'atteindre une efficacité électrique élevée en fonction du niveau d'ensoleillement.

Le système d'éclairage et son procédé de commande permettent de produire un rayonnement artificiel présentant une distribution spectrale énergétique pouvant s'adapter continuellement aux besoins particuliers d'un végétal et aux conditions environnementales, notamment d'ensoleillement, favorisant ainsi un développement rapide et correct du végétal tout au long de l'année.

Le système d'éclairage et son procédé de commande permettent de modifier en continu la distribution spectrale énergétique du rayonnement produit par le dispositif d'éclairage artificiel sans occasionner de perte importante en termes d'énergie rayonnée par le dispositif.

En particulier, lorsque l'éclairage naturel apporte des densités de flux de photons de valeur suffisante sur les différentes bandes de longueur d'onde secondaires, le système d'éclairage et son procédé de commande permettent de produire un rayonnement exclusivement situé dans la bande de longueur d'onde primaire en utilisant sensiblement 100% de la puissance électrique nominale fournie par l'unité d'alimentation, et donc potentiellement la puissance électrique nominale maximale.

En particulier, lorsque l'éclairage naturel n'apporte plus des densités de flux de photons de valeur suffisante sur les différentes bandes de longueur d'onde secondaires, le système d'éclairage et son procédé de commande permettent de produire un rayonnement suffisant dans les bandes de longueur d'onde secondaires de manière à compléter l'éclairage naturel tout en continuant à favoriser la bande de longueur d'onde primaire.

Le système d'éclairage et son procédé de commande permettent au dispositif d'éclairage artificiel d'utiliser sensiblement 100% de la puissance électrique nominale fournie par l'unité d'alimentation, et donc potentiellement la puissance électrique nominale maximale, quelle que soit la distribution spectrale énergétique du rayonnement produit par le dispositif d'éclairage artificiel. La portée de l'invention est limité aux revendications annexées.

## Revendications

1. Système d'éclairage comprenant au moins :
- Une unité de commande (13);
- Un dispositif d'éclairage artificiel agencé pour produire un rayonnement destiné à favoriser un développement d'un végétal (100), ledit au moins un dispositif comprenant :
• Un ensemble d'unités d'éclairage primaire (U₁₁) agencé pour produire un rayonnement primaire (Rₚ) dans une bande de longueur d'onde primaire, ledit ensemble primaire étant configuré pour fonctionner avec une puissance électrique primaire (P₁) dans une gamme de puissance électrique délimitée par une puissance électrique primaire maximale de consommation ;
• Au moins un ensemble d'unités d'éclairage secondaire (U₂₁, U₂₂) agencé pour produire un rayonnement secondaire (Rₛ₂₁, R_{S22}) dans une bande de longueur d'onde secondaire, ledit ensemble secondaire étant configuré pour fonctionner avec une puissance électrique secondaire (P₂₁, P₂₂) comprise dans une gamme de puissance électrique délimitée par une puissance électrique secondaire maximale de consommation ;
- Une unité d'alimentation (10) en courant électrique agencée pour fournir une puissance électrique nominale (Pₙ) comprise dans une gamme de puissance électrique délimitée par une puissance électrique nominale maximale d'alimentation, l'unité d'alimentation (10) étant configurée pour fournir, en réponse à au moins une commande (Cmd1, Cmd2, Cmd3, Cmd4) de l'unité de commande (13), à l'ensemble d'unités d'éclairage primaire (U₁₁) une puissance électrique primaire (P₁) et à l'au moins un ensemble d'unités d'éclairage secondaire (U₂₁, U₂₂, U₂₃) une puissance électrique secondaire (P₂₁, P₂₂, P₂₃), l'unité de commande (13) étant agencée pour commander l'unité d'alimentation (10) de manière à permettre une variation de la puissance électrique nominale (Pₙ) fournie par l'unité d'alimentation (10), **caractérisé en ce que** ledit système d'éclairage comprenant
- Au moins un convertisseur de puissance électrique (121, 122, 123) agencé de manière à permettre une variation de la puissance électrique secondaire (P₂₁, P₂₂, P₂₃), l'unité de commande étant agencée pour commander l'au moins un convertisseur de puissance électrique (121, 122, 123).
la puissance électrique primaire maximale de consommation étant comprise dans une gamme de valeur comprise entre 90 et 100% de la puissance électrique nominale maximale d'alimentation.

2. Système d'éclairage selon la revendication 1, dans lequel la puissance électrique primaire maximale de consommation est supérieure à la puissance électrique secondaire maximale de consommation.

3. Système d'éclairage selon l'une des revendications précédentes, dans lequel le rayonnement primaire (Rₚ) permet une efficacité photonique supérieure et/ou une efficacité photosynthétique supérieure au rayonnement secondaire (Rₛ₂₁, Rₛ₂₂).

4. Système d'éclairage selon l'une des revendications précédentes, le système d'éclairage comprenant :
- Une pluralité d'ensembles d'unités d'éclairage secondaires (U₂₁, U₂₂), chacun desdits ensembles d'unités d'éclairage secondaires étant agencé pour produire un rayonnement secondaire (Rₛ₂₁, Rₛ₂₂) dans une bande de longueur d'onde distincte, chacun desdits ensembles d'unités d'éclairage secondaires (U₂₁, U₂₂) étant configuré pour fonctionner avec une puissance électrique secondaire (P₂₁, P₂₂) comprise dans une gamme de puissance électrique délimitée par une puissance électrique secondaire maximale de consommation;
- Une pluralité de convertisseurs de puissance électrique (121, 122, 123), chacun desdits convertisseurs de puissance électrique étant agencé de manière à permettre une variation de la puissance électrique secondaire consommée par un ensemble d'unités d'éclairage secondaire distinct.

5. Système d'éclairage selon l'une des revendications précédentes, dans lequel l'unité de commande (13) comprend au moins une première unité de détermination agencée pour déterminer, sur une bande de longueur d'onde comprenant au moins la bande de longueur d'onde primaire et chaque bande de longueur d'onde secondaire, une distribution spectrale énergétique d'au moins un rayonnement reçu par le végétal (100).

6. Système d'éclairage selon la revendication 5, dans lequel la distribution spectrale énergétique de l'au moins un rayonnement reçu par le végétal (100) comprend une densité de flux de photons reçu par le végétal sur la bande de longueur d'onde primaire, et pour chaque bande de longueur d'onde secondaire, une densité de flux de photons reçu par le végétal (100) sur chaque bande de longueur d'onde secondaire.

7. Système d'éclairage selon l'une des revendications précédentes, comprenant au moins une unité de détection agencée pour effectuer au moins une mesure d'une densité de flux de photons reçu par le végétal (100) et produit par au moins un rayonnement sur au moins une bande de longueur d'onde.

8. Système d'éclairage selon l'une des revendications 5 à 7, dans lequel l'au moins un rayonnement reçu par le végétal (100) comprend:
- Un rayonnement produit par l'éclairage artificiel ;
- Un rayonnement produit par l'éclairage naturel (R) ;
- Un rayonnement global résultant de la combinaison de l'éclairage artificiel et de l'éclairage naturel.

9. Système d'éclairage selon l'une des revendications 7 ou 8, dans lequel la première unité de détermination est agencée pour déterminer une distribution spectrale énergétique d'au moins un rayonnement reçu par le végétal (100) en prenant en compte au moins une mesure effectuée par l'au moins une unité de détection (16).

10. Système d'éclairage selon l'une des revendications précédentes, dans lequel l'unité de commande (13) comprend une unité d'obtention de modèle cible agencée pour obtenir au moins un modèle cible de distribution spectrale énergétique du rayonnement global reçu par le végétal, l'unité d'obtention comprenant au moins une deuxième unité de détermination configurée pour déterminer, en fonction d'au moins un paramètre, au moins un modèle cible de distribution spectrale énergétique du rayonnement global reçu par le végétal.

11. Système d'éclairage selon la revendication 10, dans lequel l'unité de commande (13) comprend une unité de comparaison agencée pour comparer la distribution spectrale énergétique du rayonnement global audit au moins un modèle cible, l'unité de commande étant configurée pour déterminer au moins une commande en prenant en compte au moins un écart entre la distribution spectrale énergétique du rayonnement global et l'au moins un modèle cible, ladite au moins une commande visant à diminuer ledit écart en prenant en compte la distribution spectrale énergétique du rayonnement produit par le dispositif d'éclairage artificiel.

12. Système d'éclairage selon la revendication 11, dans lequel l'unité de comparaison est agencée pour comparer à une densité de flux de photons primaire cible la densité de flux de photons global reçu par le végétal (100) sur la bande de longueur d'onde primaire, et pour chaque bande de longueur d'onde secondaire, pour comparer à une densité de flux de photons secondaire cible correspondant à une bande de longueur d'onde secondaire la densité de flux de photons global reçu par le végétal sur ladite bande de longueur d'onde secondaire.

## Patentansprüche

1. Beleuchtungssystem, das mindestens Folgendes umfasst:
- Eine Steuereinheit (13);
- Eine künstliche Beleuchtungsvorrichtung, die so angeordnet ist, dass sie eine Strahlung erzeugt, die dazu bestimmt ist, die Entwicklung einer Pflanze (100) zu fördern, wobei die mindestens eine Vorrichtung Folgendes umfasst:
• Eine Baugruppe von Primärbeleuchtungseinheiten (U₁₁), die so angeordnet ist, dass sie eine Primärstrahlung (Rₚ) in einem Primärwellenlängenband erzeugt, wobei die Primärbaugruppe so eingerichtet ist, dass sie mit einer elektrischen Primärleistung (P₁) in einem elektrischen Leistungsbereich betrieben wird, der durch eine maximale elektrische Primärverbrauchsleistung begrenzt ist;
• Mindestens eine Baugruppe von Sekundärbeleuchtungseinheiten (U₂₁, U₂₂), die so angeordnet ist, dass sie eine Sekundärstrahlung (Rₛ₂₁, R_{S22}) in einem Sekundärwellenlängenband erzeugt, wobei die Sekundärbaugruppe so eingerichtet ist, dass sie mit einer elektrischen Sekundärleistung (P₂₁, P₂₂) betrieben wird, die in einem elektrischen Leistungsbereich liegt, der durch eine maximale elektrische Sekundärverbrauchsleistung begrenzt ist;
- Eine Stromversorgungseinheit (10), die so angeordnet ist, dass sie eine elektrische Nennleistung (Pₙ) innerhalb eines elektrischen Leistungsbereichs bereitstellt, der durch eine maximale elektrische Nennversorgungsleistung begrenzt ist, wobei die Versorgungseinheit (10) so eingerichtet ist, dass sie als Reaktion auf mindestens einen Befehl (Cmd1, Cmd2, Cmd3, Cmd4) der Steuereinheit (13) der Baugruppe der Primärbeleuchtungseinheiten (U₁₁) eine elektrische Primärleistung (P₁) und der mindestens einen Baugruppe von Sekundärbeleuchtungseinheiten (U₂₁, U₂₂, U₂₃) eine elektrische Sekundärleistung (P₂₁, P₂₂, P₂₃) bereitstellt, wobei die Steuereinheit (13) so angeordnet ist, dass sie die Versorgungseinheit (10) steuert, um eine Änderung der von der Versorgungseinheit (10) bereitgestellten elektrischen Nennleistung (Pₙ) zu ermöglichen, **dadurch gekennzeichnet, dass** das Beleuchtungssystem Folgendes umfasst:
- Mindestens einen elektrischen Leistungswandler (121, 122, 123), der so angeordnet ist, dass er eine Variation der elektrischen Sekundärleistung (P₂₁, P₂₂, P₂₃) ermöglicht, wobei die Steuereinheit so angeordnet ist, dass sie den mindestens einen elektrischen Leistungswandler (121, 122, 123) steuert,
wobei die maximale elektrische Primärverbrauchsleistung in einem Wertebereich zwischen 90 und 100 % der maximalen elektrischen Nennversorgungsleistung liegt.

2. Beleuchtungssystem nach Anspruch 1, wobei die maximale elektrische Primärverbrauchsleistung größer ist als die maximale elektrische Sekundärverbrauchsleistung.

3. Beleuchtungssystem nach einem der vorhergehenden Ansprüche, wobei die Primärstrahlung (Rₚ) eine höhere photonische Effizienz und/oder eine höhere photosynthetische Effizienz als die Sekundärstrahlung (Rₛ₂₁, Rₛ₂₂) ermöglicht.

4. Beleuchtungssystem nach einem der vorhergehenden Ansprüche, wobei das Beleuchtungssystem Folgendes umfasst:
- Eine Vielzahl von Baugruppen von Sekundärbeleuchtungseinheiten (U₂₁, U₂₂), wobei jede der Baugruppen von Sekundärbeleuchtungseinheiten so angeordnet ist, dass sie eine Sekundärstrahlung (Rₛ₂₁, Rₛ₂₂) in einem separaten Wellenlängenband erzeugt, wobei jede der Baugruppen von Sekundärbeleuchtungseinheiten (U₂₁, U₂₂) so eingerichtet ist, dass sie mit einer elektrischen Sekundärleistung (P₂₁, P₂₂) betrieben wird, die innerhalb eines elektrischen Leistungsbereichs liegt, der durch eine maximale elektrische Sekundärverbrauchsleistung begrenzt ist;
- Eine Vielzahl von elektrischen Leistungswandlern (121, 122, 123), wobei jeder der elektrischen Leistungswandler so angeordnet ist, dass er eine Variation der elektrischen Sekundärleistung ermöglicht, die von einer Baugruppe von separaten Sekundärbeleuchtungseinheiten verbraucht wird.

5. Beleuchtungssystem nach einem der vorhergehenden Ansprüche, wobei die Steuereinheit (13) mindestens eine erste Bestimmungseinheit umfasst, die so angeordnet ist, dass sie über ein Wellenlängenband, das mindestens das Primärwellenlängenband und jedes Sekundärwellenlängenband umfasst, eine spektrale Energieverteilung von mindestens einer von der Pflanze (100) empfangenen Strahlung bestimmt.

6. Beleuchtungssystem nach Anspruch 5, wobei die spektrale Energieverteilung der mindestens einen von der Pflanze (100) empfangenen Strahlung eine von der Pflanze auf dem Primärwellenlängenband empfangene Photonenstromdichte und für jedes Sekundärwellenlängenband eine von der Pflanze (100) auf jedem Sekundärwellenlängenband empfangene Photonenstromdichte umfasst.

7. Beleuchtungssystem nach einem der vorhergehenden Ansprüche, umfassend mindestens eine Detektionseinheit, die so angeordnet ist, dass sie mindestens eine Messung einer Photonenstromdichte durchführt, die von der Pflanze (100) empfangen und von mindestens einer Strahlung auf mindestens einem Wellenlängenband erzeugt wird.

8. Beleuchtungssystem nach einem der Ansprüche 5 bis 7, wobei die mindestens eine von der Pflanze (100) empfangene Strahlung Folgendes umfasst:
- Eine Strahlung durch künstliche Beleuchtung;
- Eine Strahlung durch Tageslicht (R);
- Eine Gesamtstrahlung, die sich aus der Kombination von künstlicher Beleuchtung und Tageslicht ergibt.

9. Beleuchtungssystem nach einem der Ansprüche 7 oder 8, wobei die erste Bestimmungseinheit so angeordnet ist, dass sie eine spektrale Energieverteilung von mindestens einer von der Pflanze (100) empfangenen Strahlung bestimmt, indem sie mindestens eine Messung berücksichtigt, die von der mindestens einen Detektionseinheit (16) durchgeführt wird.

10. Beleuchtungssystem nach einem der vorhergehenden Ansprüche, wobei die Steuereinheit (13) eine Zielmuster-Erhaltseinheit umfasst, die so angeordnet ist, dass sie mindestens ein Zielmuster der spektralen Energieverteilung der von der Pflanze empfangenen Gesamtstrahlung erhält, wobei die Erhaltseinheit mindestens eine zweite Bestimmungseinheit umfasst, die so eingerichtet ist, dass sie in Abhängigkeit von mindestens einem Parameter mindestens ein Zielmuster der spektralen Energieverteilung der von der Pflanze empfangenen Gesamtstrahlung bestimmt.

11. Beleuchtungssystem nach Anspruch 10, wobei die Steuereinheit (13) eine Vergleichseinheit umfasst, die so angeordnet ist, dass sie die spektrale Energieverteilung der Gesamtstrahlung mit dem mindestens einen Zielmuster vergleicht, wobei die Steuereinheit so eingerichtet ist, dass sie mindestens eine Steuerung bestimmt, indem sie mindestens eine Abweichung zwischen der spektralen Energieverteilung der Gesamtstrahlung und dem mindestens einen Zielmuster berücksichtigt, wobei die mindestens eine Steuerung auf die Verringerung der Abweichung unter Berücksichtigung der spektralen Energieverteilung der von der künstlichen Beleuchtungseinrichtung erzeugten Strahlung abzielt.

12. Beleuchtungssystem nach Anspruch 11, wobei die Vergleichseinheit so angeordnet ist, dass sie die von der Pflanze (100) auf dem Primärwellenlängenband empfangene Gesamtphotonenstromdichte mit einer Zielprimärphotonenstromdichte vergleicht und für jedes Sekundärwellenlängenband die von der Pflanze auf dem Sekundärwellenlängenband empfangene Gesamtphotonenstromdichte mit einer Zielsekundärphotonenstromdichte, die einem Sekundärwellenlängenband entspricht, vergleicht.

## Claims

1. Lighting system comprising at least:
- One control unit (13);
- One artificial lighting device arranged to produce radiation intended to promote the development of a vegetable (100), said at least one device comprising:
- A primary set of lighting units (U₁₁) arranged to produce a primary radiation (Rₚ) in a primary wavelength band, said primary set being configured to operate with a primary electric power (P₁) in an electric power range delimited by a maximum consumption primary electric power;
- At least one secondary set of lighting units (U₂₁, U₂₂) arranged to produce a secondary radiation (Rₛ₂₁, Rₛ₂₂) in a secondary wavelength band, said secondary set being configured to operate with a secondary electric power (P₂₁, P₂₂) included in an electric power range delimited by a maximum consumption secondary electric power;
- An electric current supply unit (10) arranged to provide a rated electric power (Pₙ) included in an electric power range delimited by a maximum supply rated electric power, the power supply unit (10) being configured to supply, in response to at least one command (Cmd1, Cmd2, Cmd3, Cmd4) of the control unit (13), the primary set of lighting units (U₁₁) with a primary electric power (P₁) and the at least one secondary set of lighting units (U₂₁, U₂₂, U₂₃) with a secondary electric power (P₂₁, P₂₂, P₂₃), the control unit (13) being arranged to control the power supply unit so as to allow a variation of the rated electric power (Pₙ) supplied by the power supply unit (10), the lighting system being **characterized in that** it comprises:
- at least one electric power converter (121, 122, 123) arranged so as to allow a variation of the secondary electric power (P₂₁, P₂₂, P₂₃), the control unit being arranged to to control the at least one electric power converter (121, 122, 123),
the maximum consumption primary electric power being included in a value range comprised between 90 and 100% of the maximum supply rated electric power.

2. Lighting system according to claim 1, wherein the maximum consumption primary electric power is greater than the maximum consumption secondary electric power.

3. Lighting system according to any of the preceding claims, wherein the primary radiation (Rₚ) allows higher photonic efficiency and/or higher photosynthetic efficiency than the secondary radiation (Rₛ₂₁, Rₛ₂₂).

4. Lighting system according to any of the preceding claims, wherein the lighting system further comprises:
- A plurality of secondary sets of lighting units (U₂₁, U₂₂), each of said secondary sets of lighting units being arranged to produce a secondary radiation (Rₛ₂₁, Rₛ₂₂) in a distinct wavelength band, each of said secondary sets of lighting units (U₂₁, U₂₂) being configured to operate with a secondary electric power (P₂₁, P₂₂) included in an electric power range delimited by a maximum consumption secondary electric power;
- A plurality of electric power converters (121, 122, 123), each of said electric power converters being arranged so as to allow a variation of the secondary electric power consumed by a distinct secondary set of lighting units.

5. Lighting system according to any of the preceding claims, the control unit (13) comprises at least one first determination unit arranged to determine, on a wavelength band comprising at least the primary wavelength band and each secondary wavelength band, an energy spectral distribution of at least one radiation received by the vegetable (100).

6. Lighting system according to claim 5, wherein the energy spectral distribution of the at least one radiation received by the vegetable (100) comprises a density of photon flux received by the vegetable (100) on the primary wavelength band, and, for each secondary wavelength band, a density of photon flux received by the vegetable on each secondary wavelength band.

7. Lighting system according to any of the preceding claims, wherein the lighting system comprises at least one detection unit arranged to perform at least one measurement of a density of photon flux received by the vegetable (100) and produced by at least one radiation on at least one wavelength band.

8. Lighting system according to any one of the claims 5 to 7, wherein the at least one radiation received by the vegetable (100) comprises:
- A radiation produced by the artificial lighting;
- A radiation produced by the natural lighting (R);
- A global radiation resulting from the combination of the artificial lighting and natural lighting.

9. Lighting system according to any of the claims 7 or 8, wherein the first determination unit is arranged to determine an energy spectral distribution of at least one radiation received by the vegetable (100) taking into account at least one measurement performed by the at least one detection unit (16).

10. Lighting system according to any of the preceding claims, wherein the control unit (13) comprises an obtaining unit arranged to obtain at least one target model of energy spectral distribution of the global radiation received by the vegetable, the obtaining unit comprising at least one second determination unit configured to determine, as a function of at least one parameter, at least one target model of energy spectral distribution of the global radiation received by the vegetable.

11. Lighting system according to claim 10, wherein the control unit (13) comprises a comparison unit arranged to compare the energy spectral distribution of the global radiation to at least one target model, the control unit being configured to determine at least one command taking into account at least one difference between the energy spectral distribution of the global radiation and the at least one target model, said at least one command aiming at reducing said difference taking into account the energy spectral distribution of the radiation produced by the artificial lighting device.

12. Lighting system according to claim 11, wherein the comparison unit is arranged to compare to a target primary photon flux density the global density of photon flux received by the vegetable (100) on the primary wavelength band, and for each secondary wavelength band, to compare to a target secondary photon flux density corresponding to a secondary wavelength band the density of global photon flux received by the vegetable on said secondary wavelength band.
